# EUROPEAN PATENT APPLICATION

(11) **EP 1 386 891 A1**
(43) Date of publication of application: **04.02.2004**
(21) Application number: 02708774.1
(22) Date of filing: 02.04.2002
(51) Int. Cl.: C03B 33/10, B28D 5/00

(54) **CUTTER WHEEL, DEVICE AND METHOD USING THE CUTTER WHEEL, METHOD OF DIVIDING LAMINATED SUBSTRATE, AND METHOD AND DEVICE FOR MANUFACTURING CUTTER WHEEL**

(30) Priority: 02.04.2001 JP 2001103664
(71) Applicant: Mitsuboshi Diamond Industrial Co., Ltd., Suita-city, Osaka Pref. 564-0044 (JP)
(72) Inventor: MAEKAWA, Kazuya, MITSUBOSHI DIAMOND INDUST. CO.LTD, Suita-shi, Osaka 564-0044 (JP); SOYAMA, Hiroshi, MITSUBOSHI DIAMOND INDUST. CO.LTD, Suita-shi, Osaka 564-0044 (JP)
(74) Representative: Leson, Thomas Johannes Alois, Dipl.-Ing.
(86) International application number: PCT/JP2002/003314
(87) International publication number: WO 2002/081392

(57) **Abstract**

A cutter wheel 1 is formed with an insertion through-hole 6 at the center of the wheel, along with a blade-edge ridge 2 that is displaced to one side face from a center 5 between wheel side faces 3 and 4. The larger the extent of displacement of the blade-edge ridge 2, that is, the greater the distance from the center 5 until the blade-edge ridge 2, or in other words, the smaller the distance between the left-side face 3 and the blade-edge ridge 2, the closer scribing can be performed to the convex portion and thin film X of the devices during scribing.

## Description

### TECHNICAL FIELD

The present invention relates to cutter wheels that are scribing cutters used for forming scribe lines on brittle materials, as well as scribing apparatus that are equipped with such cutter wheels; scribing methods by which scribe lines are formed for the purpose of scribe-breaking brittle materials, and scribe-breaking methods for bonded substrates, as well as cutter wheel manufacturing methods and apparatus for producing cutter wheels.

Brittle materials includes such materials as glass, semiconductor wafers, ceramics, and so on used in glass substrates, bonded glass substrates, and the like.

### BACKGROUND ART

In comparison to displays that use liquid crystal display devices (LCD), organic electroluminescent (EL) displays that use organic EL devices do not need a backlight as they are self light-emitting, and for this reason they are also enabling ever thinner display designs. Furthermore, as they have many other advantages such as low power consumption and speedy responsiveness, development of these devices has been proceeding rapidly in recent years as the next generation of front panel displays (FPD) to replace LCD displays.

Organic EL devices are formed by layering a transparent anode layer, an organic hole injection layer, an organic light-emitting layer, and a metallic electrode layer (cathode) on a glass substrate in that order. By applying a DC voltage to the device, electrons from the anode, and holes from the cathode are injected respectively into the organic hole injection layer, with the electrons and the holes recombining in the organic light-emitting layer and forming an excited state, and the transfer process from this excited state to a normal state causes light emission. As with semiconductor chips such as large scale integrated circuits (LSI) for example, organic EL devices such as these are manufactured through a process in which a multitude of devices are formed on a brittle substrate in a matrix shape, and the substrate is cut and separated according to each device unit.

Incidentally, there are two typical methods used for cutting and separating brittle substrates such as glass, silicon, and ceramics: dicing, in which the substrate is machined with a 50 to 200-µm thick diamond blade rotating at high speed and forming a groove for cutting on the substrate, and scribing, in which a crack is produced on the substrate in the direction of its thickness by scratching its surface with a cutter wheel made of diamond with a thickness of about 0.6 to 2 mm.

Dicing can be said to be a favorable method since it uses an extremely thin blade compared to the cutter wheel of the above-described scribing method, and therefore, when cutting a substrate that has a thin film or convex portion formed on the surface such as the above-described organic EL device, the film and convex portion tend not to be damaged.

However, with dicing, frictional heat is produced in the area in which the blade is machining, and machining is performed while supplying a coolant to this area, so that dicing is definitely not always preferable for organic EL devices, which have metallic portions such as a metallic electrode layer and metallic terminals. That is, in the case of dicing, it is in fact very difficult to remove all of the coolant after dicing, and when there is residual water due to incomplete coolant removal, there is the risk of corrosion occurring in the metallic portions of the organic EL device. Furthermore, the cutting time of dicing is longer compared to scribing, and thus there is the problem of poor productivity.

In contrast to this, no coolant whatsoever is required for scribing, so it has a better product yield than dicing, as well as the advantage of superior productivity due to its shorter cutting times compared to dicing.

With scribing, however, there are problems of a completely different nature from dicing.

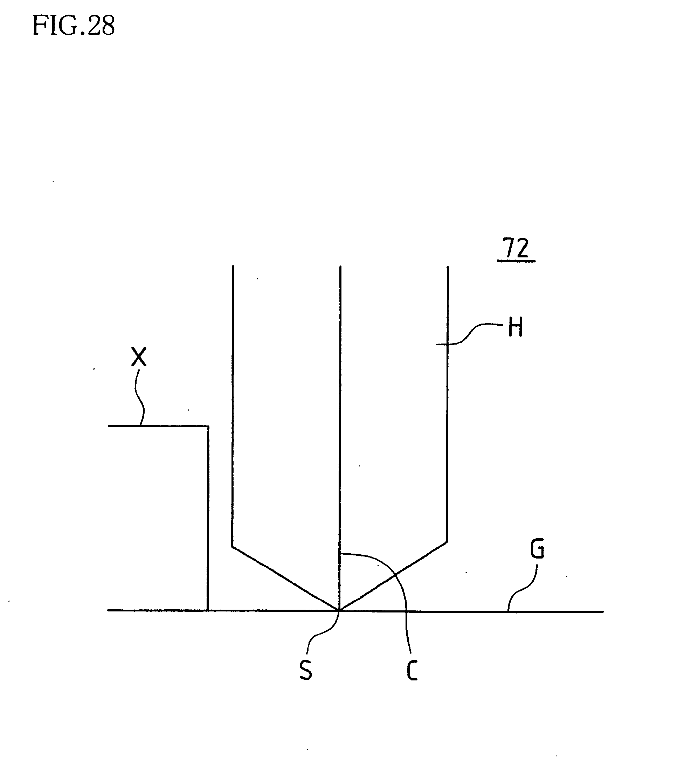

Namely, unlike dicing, scribing is difficult when there is a thin film on the substrate, so when cutting and separating with scribing, convex portions and thin films that include light-emitting portions are formed on the surface of the substrate with intervals in which the cutter wheel can be inserted. Therefore, scribing is performed with a cutter wheel on the substrate surface that is exposed between the convex portions and the thin film, but, as shown in FIG. 28, a conventional cutter wheel H has a blade-edge ridge C at the center between the side faces of the wheel, so that the scribing position S must be in a location sufficiently away from the convex portions and thin film X so that the cutter wheel H does not interfere with the convex portion or thin film X. However, when the scribing position S is a position away from the convex portion or thin film X in this way, there is the problem that the area for each device on the substrate becomes larger than necessary.

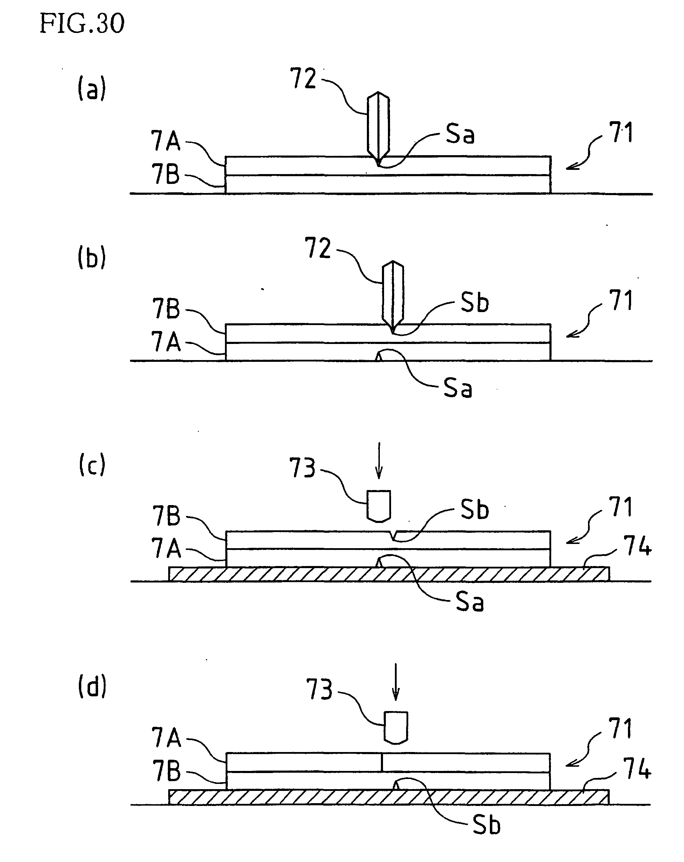

FIGS. 30(a) to (d) are cross sections that explain each step in a first scribe-breaking method of a liquid crystal mother substrate, as an example of a conventional procedure for cutting a bonded glass substrate such as a liquid crystal mother substrate in respective desired cutting positions. It should be noted that, for convenience, the glass substrate of one side of the bonded glass substrate 71, which is a liquid crystal mother substrate, formed by bonded a pair of glass substrates facing together is taken as glass substrate 7A, and the glass substrate of the other side is taken as glass substrate 7B in the following explanation.
(1) First, as shown in FIG. 30(a), with glass substrate 7A of the bonded glass substrate 71 facing up, the bonded glass substrate 71 is mounted on a first scribing device, and a scribe line Sa is formed on the glass substrate 7A by scribing using a glass cutter wheel 72.
(2) Next, the bonded glass substrate 71 on which the scribe line Sa has been formed on the glass substrate 7A is turned over, and transported to a second scribing apparatus. Then, with this second scribing apparatus, and as shown in FIG. 30(b), a scribe line Sb is formed parallel to the scribe line Sa on the glass substrate 7B of the bonded glass substrate 71 by scribing using the glass cutter wheel 72. It should be noted that a plurality of liquid crystal panels are formed on the liquid crystal mother substrate, and as it is necessary to form terminals on one side of the periphery of the glass substrate on which each of the liquid crystal panels is formed, it is common that the scribe line Sb formed on the glass substrate 7B and the scribe line Sa formed on the glass substrate 7A are formed in different scribing positions in the horizontal direction.
(3) Next, without turning over the glass substrate 7A and the glass substrate 7B, the bonded glass substrate 71, with scribe lines Sa and Sb formed respectively on the glass substrate 7A and the glass substrate 7B, is transported to a first breaking apparatus with the glass substrate B facing up. As shown in FIG. 30(c), the bonded glass substrate 71 is mounted onto a mat 74 in the first breaking apparatus, and a breaker bar 73 pushes the glass substrate 7B of the bonded glass substrate 71 along the scribe line Sa formed on the glass substrate 7A. This extends a crack from the scribe line Sa of the lower side glass substrate 7A in an upward direction, and breaks the glass substrate A along the scribe line Sa.
(4) Next, the bonded glass substrate 71 with the broken glass substrate 7A is turned over, and transported to a second breaking apparatus with the glass substrate 7A facing up. As shown in FIG. 30(d), the bonded glass substrate 71 is mounted onto the mat 74 in the second breaking device, and the breaker bar 73 pushes the glass substrate 7A of the bonded glass substrate 71 along the scribe line Sb formed on the glass substrate 7B. This breaks the glass substrate 7A, which is on the lower side, along the scribe line Sb.

By executing the steps (1) to (4), the bonded glass substrate 71 is scribe-broken in two in a desired location.

As shown in steps (3) and (4), the lower-side glass substrate is broken by pressing the glass panel positioned on the upper side with the breaker bar 73. For example, when the upper-side glass substrate 7B is pressed with the breaker bar 73 as shown in FIG. 30(c), the portions of the glass substrate 7A and the glass substrate 7B that are being pushed by the breaker bar 73 are held down, and a force is exerted so that the vertical fissure (vertical crack) of the scribe line Sa produced on the glass substrate 7A spreads in both directions. In this way, the vertical crack is extended upwards, and the glass substrate 7A is scribe-broken when the crack reaches the upper portion of the glass substrate 7A. On the other hand, as opposed to the situation of the glass substrate on the lower side, a suppressing force is effected on both sides of the fissure (vertical crack) of the scribe line Sb formed on the upper-side glass substrate 7B, so the glass substrate 7B on the upper side does not break.

In the breaking processes that are executed in steps (3) and (4), when the depth of the vertical crack of the scribe line Sa of the lower-side glass substrate 7A is shallow as shown in FIG. 30(c) for example, application of a comparatively large pressing force is required to break the glass substrate 7A. However, when the pressing force of the breaker bar 73 is too strong, there is the risk that the upper-side glass substrate 7B will break at the same time. In this case, no problem is presented for the glass substrate 7A on the lower side as breaking proceeds with the vertical crack extending approximately vertically, but for the glass substrate 7B on the upper side, as the position in which a pressing force is applied by the breaker bar 73, and the position in which the scribe line Sb is formed on the glass substrate 7B are different, a force with a direction that would break the glass substrate 7B on the upper side is not effected, and therefore there is the risk that a diagonally scribe-broken surface will be formed. Furthermore, there is also the risk that fissured portions will collide and cause fragmentation (horizontal cracking) in that location. A bonded glass substrate in which such a diagonally scribe-broken surface or fragmentation has been produced loses its commercial value as a liquid crystal panel.

For this reason, in JP H6-48755A, "Method for cutting bonded glass substrate," the present applicants have offered a method of scribe-breaking brittle substrates that can solve such problems.

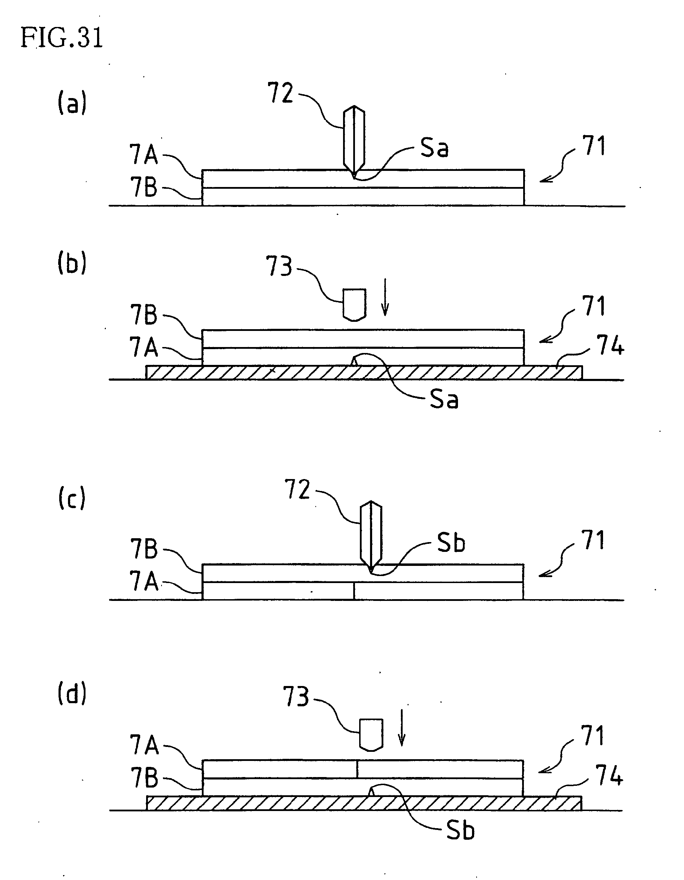

FIGS. 31(a) to (d) are cross sections that explain each step in a second scribe-breaking method of scribe-breaking a brittle material disclosed in JP H6-48755A. The following is an explanation of the method disclosed in JP H6-48755A based on FIGS. 31(a) to (d).

It should be noted that, for convenience, as with the above FIGS. 30(a) to (d), the glass substrate of one side of the bonded glass substrate 71, which is a liquid crystal mother substrate, formed by bonded a pair of glass substrates facing together is taken as glass substrate 7A, and the glass substrate of the other side is taken as glass substrate 7B in the following explanation.
(1) First, as shown in FIG. 31(a), the bonded glass substrate 71 is mounted on a first scribing apparatus with the glass substrate 7A facing up, and a scribe line Sa is formed on the glass substrate 7A by scribing using a glass cutter wheel 72.
(2) Next, the rear side of the bonded glass substrate 71 on which the scribe line Sa has been formed on the glass substrate 7A is turned over, and transported to a first breaking apparatus.
   As shown in FIG. 31(b), the bonded glass substrate 71 is mounted onto a mat 74 in the first breaking apparatus, and a breaker bar 3 pushes the glass substrate 7B of the bonded glass substrate 71 along the scribe line Sa formed on the glass substrate 7A. This extends a crack from the scribe line Sa of the lower-side glass substrate A in an upward direction, and breaks the glass substrate 7A along the scribe line Sa.
(3) Next, without turning over the glass substrate 7A and the glass substrate 7B, the bonded glass substrate 71 with the broken glass substrate 7A is transported to a second scribing device. Then, with this second scribing device, and as shown in FIG. 31(c), a scribe line Sb is formed parallel to the scribe line Sa on the glass substrate 7B of the bonded glass substrate 71 by scribing using the glass cutter wheel 2. It should be noted that a plurality of liquid crystal panels are formed on the liquid crystal mother substrate, and as it is necessary to form terminals on one side of the periphery of the glass substrate on which each of the liquid crystal panels is formed, it is common that the scribe line Sb formed on the glass substrate 7B and the scribe line Sa formed on the glass substrate 7A are formed in shifted scribing positions in the horizontal direction.
(4) Next, the bonded glass substrate 71 is turned over, and transported to a second breaking apparatus with the glass substrate 7A facing up. As shown in FIG. 31(d), the bonded glass substrate 71 is mounted onto a mat 74 in the second breaking apparatus, and a breaker bar 73 pushes the glass substrate 7A of the bonded glass substrate 71 at the portion facing the scribe line Sb formed on the glass substrate 7B along the scribe line Sb. This breaks the lower-side glass substrate 7B along the scribe line Sb. By executing the steps (1) to (4), the bonded glass substrate 71 is scribe-broken in a desired location.

During the steps of breaking in this second scribe-breaking method of brittle materials, a scribe line is formed on the glass substrate on the lower side, which is the target for breaking, as shown in steps (2) and (4), but as there is no scribe line on the upper-side glass substrate, the upper-side glass substrate does not break at the same time as the lower-side glass substrate. And therefore a problem of the first scribe-breaking method shown in the above-described FIGS. 30(a) to (d), that is, the risk of producing a diagonally scribe-broken surface or fragmentation or the like is eliminated.

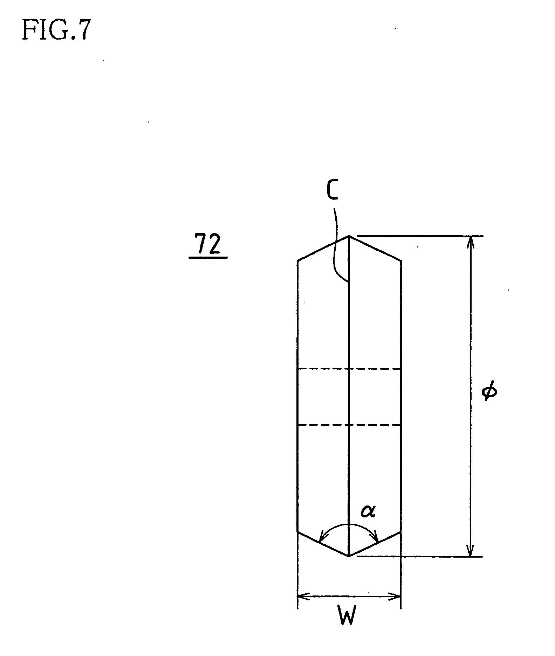

FIG. 7 is a lateral view of the glass cutter wheel 72 used in the first and second scribe-breaking methods as seen from a direction perpendicular to the rotating shaft of the glass cutter wheel. The glass cutter wheel 72 is disk-shaped with a wheel diameter φ and a wheel thickness W, and forms a blade-edge with an obtuse blade-edge angle α at the periphery of the wheel.

In JP H9-188534A, "Glass cutter wheel," the present applicants have disclosed a glass cutter wheel that improves on the glass cutter wheel 2 shown in FIG. 7, and moreover is capable of forming deep vertical cracks.

FIG. 29 includes a lateral view of the glass cutter wheel disclosed in JP H9-188534A as seen from a direction along the rotating shaft of the glass cutter wheel.

The glass cutter wheel 25 is provided with depressions and protrusions at the ridge portion of the blade-edge formed at the periphery of the wheel. That is, grooves 25b of a U-shape or a V-shape are formed at the blade-edge ridge portion 25a. The grooves 25b are formed by forming cut-outs with a depth h from the blade-edge ridge portion 25a at a pitch P. With grooves 25b such as these formed, the glass cutter wheel has a shape that is formed with protrusions j of a height h for each interval of a pitch P.

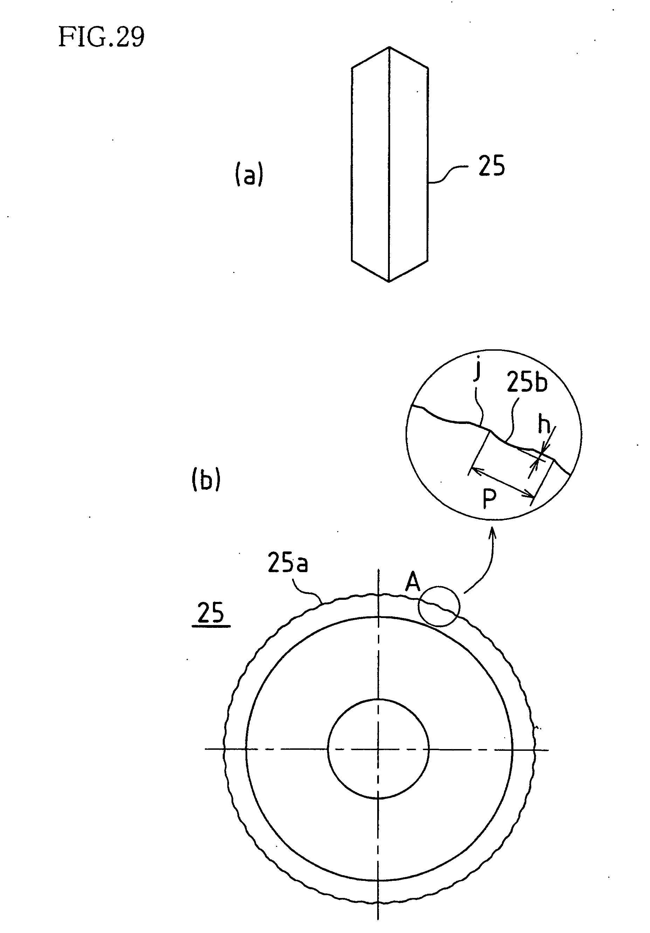

Furthermore, in FIGS. 29(a) and (b), the grooves formed at the blade-edge ridge portion of the glass cutter wheel have been drawn larger in order to be easy to understand, but the grooves are actually of a size of the micron order that is not visible to the naked eye.

Specific numerical values of the wheel diameter φ, the wheel thickness W, and so on are shown in Table 1 below, with two types of wheel, a type 1 and type 2, shown as an example.

**Table 1**

| | Type 1 | Type 2 |
|---|---|---|
| Wheel diameter φ | 2.5 mm | 2.0 mm |
| Wheel thickness W | 0.65 mm | 0.65 mm |
| blade-edge angle α | 125° | 125° |
| No. of protrusions j | 125 | 110 |
| Height h of protrusions | 5 µm | 10 µm |
| j | 63 µm | 63 µm |
| Pitch p | 3.6 Kgf | 1.8 Kgf |
| Blade-edge pressure | 300 mm/sec | 400 mm/sec |
| Scribing speed | | |

A glass cutter wheel 25 such as these provided with depressions and protrusions at the ridge portion is capable of dramatically improving scribing performance, that is, the ability to form vertical cracks, and when scribing is performed using this glass cutter wheel 5, it is possible to achieve during scribing deep vertical cracks that reach until the vicinity of the lower surface of the glass.

The above-described glass cutter wheel provided with depressions and protrusions at the ridge portion can greatly improve scribing performance compared with conventional glass cutter wheels, but as it is formed with precise depressions and protrusions along the entire periphery of its ridge portion, and because considerable time is required to work and form the depressions and protrusions at the ridge portion, there are workability problems. Furthermore, when carrying out the second scribe-breaking method shown in FIG. 31 using the glass cutter wheel 15 provided with depressions and protrusions at the ridge portion as described above, at the point in step (3) when the upper-side glass substrate 7B is scribed, a deep vertical crack scribe line Sb is formed on the glass substrate 7B, and the bonded glass substrate 71 may at times be substantially in a scribe-broken state. For this reason, when transporting the bonded glass substrate 71 to the second breaking apparatus by suction-clamping it with a suction pad or the like in order to proceed from step (3) to step (4), a portion of the scribe-broken bonded glass substrate 71 may remain in the second scribing device, and moreover, a portion of the scribe-broken bonded glass substrate 71 may drop off during transportation of the bonded glass substrate 71, thus there is the risk that the line equipment that scribe-breaks the bonded glass substrate 1 may not operate normally.

Further still, in such consecutive scribe-breaking processes, a vertical crack is produced as described above in the direction of the substrate thickness by causing abrasion to the surface of the respective substrates with a cutter wheel made of diamond with a thickness of about 0.6 to 2 mm that are used in scribing devices, and scribe-breaking is carried out by breaking and extending the vertical crack as appropriate. Whether few or many in number, chips (cullets) are unavoidably produced in the scribing process. And when such cullets remain on a bonded glass substrate, abrasion can be caused to the bonded glass substrate, thus becoming a cause' of damage to the quality of the bonded glass substrate. For this reason, it is necessary to carry out cullet removal operations as appropriate.

However, operations to remove the cullets produced in scribing are troublesome, and moreover, at times it is very difficult to completely remove the cullets. Furthermore, there is the problem that the surface of the glass substrate may be scratched by cullet removal. Such scratching is not desirable for a liquid crystal display glass substrate, but especially for projector substrates, even slight scratches are enlarged when projected, reducing the substrate's quality as a projector substrate, and thus reliability cannot be secured, and the yield is reduced.

In order to solve the problems of conventional apparatus and methods described above, the present invention achieves the following objectives (1) to (3).
(1) Offering a cutter wheel and a scribing apparatus that uses the cutter wheel that are capable of scribing in the vicinity of the convex portions and thin films of each device when scribe-breaking and separating a substrate without damaging the convex portions or thin films.
(2) Offering a glass cutter wheel, a scribing method for forming a scribe line for scribe-breaking brittle materials, as well as a scribing apparatus fitted with this cutter wheel, a cutter wheel manufacturing method and apparatus for producing this cutter wheel that solve the workability problems of glass cutter wheels provided with depressions and protrusions along the entire periphery of the ridge portion, and moreover, that are capable of forming desired scribe characteristics, namely, capable of forming a vertical crack scribe line of a desired depth when scribe-breaking a glass substrate.
(3) Offering a method for scribe-breaking bonded substrates that is capable of avoiding surface abrasions caused by cullets produced in the scribe-breaking processes of bonded substrates and especially projector substrates, thus offering good-quality bonded substrates, and that is also capable of obtaining a sufficient vertical crack for scribe-breaking a bonded substrate, and performing precise scribe-breaking along a scribe line.

### DISCLOSURE OF INVENTION

### Cutter Wheel

In order to achieve the above-mentioned object, the cutter wheel (invention 1) of the present invention corresponding to claim 1 is provided with a blade-edge ridge that is displaced to one side face from a center between both side faces of the wheel.

With invention 1, it becomes possible to scribe in locations near to the convex portions and thin films of devices while still ensuring a wheel thickness of necessary strength equivalent to a conventional cutter wheel. That is, by letting the convex portion or thin film of the device oppose the face of the wheel on the side closer to the blade-edge ridge, it is possible to bring the blade-edge ridge closer to the convex portions or thin film compared to conventional cutter wheels.

Furthermore, in a configuration of invention 1, protrusions of a predetermined shape may be formed at a predetermined pitch along the entire periphery or a portion of the entire periphery of the blade-edge ridge.

In this case, compared to a conventional cutter wheel without protrusions at the blade-edge ridge, when scribing with a cutter wheel of the present invention that has protrusions, an extremely long vertical crack can be produced that almost passes through the thickness of the brittle substrate. The reason for this seems to be that, during the rotation of the cutter wheel, the protrusions of the blade-edge ridge apply intermittent impacts to the substrate, and because the protrusions deeply cut into the glass panel. Furthermore, there is the advantage that it is difficult for unnecessary horizontal cracks to occur at the surface of the brittle substrate. The likely reason for this is that the cutting of the cutter wheel into the brittle substrate centers on the point contact of the protrusions, and therefore there is less stress on the surface of glass panel during scribing compared to a conventional cutter wheel. Furthermore, as the protrusions cut into the glass panel, the cutter wheel has zero slip, and therefore none of the troubles that accompany slippage such as abrasion.

The pitch of the protrusions may be 20 to 200 µm for a wheel diameter of 1 to 20 mm.

Furthermore, the height of the protrusions may be 2 to 200 µm for a wheel diameter of 1 to 20 mm.

Further still, a shaft may be integrally fitted to the wheel as a protrusion at both sides of the wheel.

In this case, control of the shaft becomes easy. That is, when using the cutter wheel, a shaft passes through the insertion through-hole provided at the center of the cutter wheel, and the wheel diameter is small being several millimeters, and therefore the shaft diameter can be smaller than 1 millimeter. And in this way, although fine control of the shaft is complicated, shaft control is easier when the shaft is integrated with the wheel.

Furthermore, a cutter wheel (invention 2) of the present invention corresponding to claim 6 is provided with the blade-edge at the ridge portion of the cutter wheel of invention 1, and a plurality of grooves of a predetermined shape and a predetermined pitch are formed at the ridge portion, and the cutter wheel is used for scribe-breaking a brittle material, wherein the proportion of a length of an area occupied by the plurality of groove portions to an entire periphery of the ridge portion is less than 1.

For the cutter wheel of invention 2, it is preferable that the proportion of the length of the area occupied by the plurality of groove portions to the entire periphery of the ridge portion is larger than 1 / 4 and not greater than 3 / 4. For the cutter wheel of invention 2, it is further preferable that the proportion of the length of the area occupied by the plurality of groove portions to the entire periphery of the ridge portion is not greater than 1 / 4.

Furthermore, for the cutter wheel of invention 2, it is preferable that the pitch of the grooves formed over the plurality of grooves is 20 to 200 µm for a wheel diameter of 1 to 20 mm.

For the cutter wheel of invention 2, it is preferable that the depth of the plurality of grooves is 2 to 200 µm for a wheel diameter of 1 to 20 mm.

For the cutter wheel of invention 2, it is preferable that the shaft that passes through the wheel is integrally formed with the wheel.

For the cutter wheel of invention 2, it is preferable that the depths of the grooves formed at the ridge portion are respectively different so that the groove depth becomes deeper from end portions of each groove portion area toward a center portion.

Furthermore, a cutter wheel (invention 3) of the present invention corresponding to claim 13 is provided with groove portions along the entire periphery of the ridge portion, wherein an area in which the depth of the grooves becomes successively deeper is continuous with an area in which the depth of the grooves becomes successively shallower.

### Scribing apparatus

A scribing apparatus (invention 4) of the present invention corresponding to claim 14 is provided with a table on which a brittle substrate is mounted, a scribe head arranged above the table, and a cross-scribing means for forming intersecting scribe lines with the scribe head in the brittle substrate on the table, wherein the scribe head is provided with any of the above-described cutter wheels.

Furthermore, the scribing apparatus may be provided with a cutter wheel rotation means for rotating an orientation of the cutter wheel by 180 degrees each time the forming of one scribe line is completed.

In this way, it is possible to scribe in predetermined locations on the substrate, namely, in locations near the convex portions and thin films of devices, without turning the substrate.

Furthermore, a scribing apparatus provided with two cutter wheels may be used. In this case, the two cutter wheels are arranged parallel, and so that the blade-edge ridge of each cutter wheel is in a farthest position from the other. Also, with an operation program, the two cutter wheels are able to selectively scribe simultaneously or separately. This makes it unnecessary for the cutter wheel to be rotated by 180 degrees each time when forming a scribe line as described above.

### Scribing method

In a scribing method (invention 5) of the present invention corresponding to claim 18, scribing is performed using the cutter wheel of invention 2 described in claim 6, and the depth of a vertical crack formed in a brittle material subjected to scribing is periodically varied.

In invention 5, it is preferable that scribing is performed using a wheel in which the proportion of the length of the area occupied by the plurality of groove portions to the entire periphery of the ridge portion is not greater than 3 / 4. In the scribing method of invention 5, it is further preferable that scribing is performed using a wheel in which the proportion of the length of the area occupied by the plurality of groove portions to the entire periphery of the ridge portion is not greater than 1 / 4.

### Bonded substrate scribe-breaking method

Furthermore, a bonded glass substrate scribe-breaking method (invention 6) of the present invention corresponding to claim 21 includes a first step of scribing, a second step of scribing, and a step of breaking, wherein the above-described glass cutter wheel of the present invention is used in at least one of the first step and the second step of scribing.

Furthermore, a bonded glass substrate scribe-breaking method (invention 7) of the present invention corresponding to claim 22 includes a first step of scribing, a first step of breaking, a second step of scribing, and a second step of breaking, wherein the above-described glass cutter wheel of the present invention is used in at least one of the first step and the second step of scribing.

A bonded substrate scribe-breaking method (invention 8) of the present invention corresponding to claim 23 which is a method of scribe-breaking a bonded substrate in which a pair of glass substrates are bonded together, includes a step of scribing in a state in which a thin film is applied to both sides of the bonded substrate.

With this configuration, cullets produced in the scribing process do not adhere to the glass substrate.

This configuration may include, after the step of scribing, a step of applying a protective film that is thicker and has a greater adhesive strength than the thin film to the thin film on the glass substrate of the upper layer, and peeling off from the glass substrate of the upper layer the protective film along with the thin film after going through a predetermined process.

In this configuration, cullets produced during the scribing process adhere to the protective film, and are removed along with the thin film when the protective film is peeled off.

Furthermore, with this configuration, after a thin film is applied to both sides of the bonded substrate, a first protective film is applied to the thin film on the glass substrate of the lower layer that is thicker than, and has a weaker adhesive strength than the thin film, and wherein, by scribing from the side of the thin film of the glass substrate of the upper layer in this state, a vertical crack is formed in the glass substrate of the upper layer that reaches to a lower surface of that glass substrate, and then, after applying a second protective film to the thin film on the glass substrate of the upper layer that is thicker than, and has a weaker adhesive strength than the thin film, and peeling off the first protective film, the bonded substrate is turned over so that the glass substrate of the lower layer becomes the upper layer side, and wherein, by scribing from the side of the thin film of the glass substrate positioned on the upper layer, a vertical crack is formed in the glass substrate positioned on the upper layer that reaches to a lower surface of that glass substrate, and then, after applying a second protective film to the thin film positioned on the upper layer, the second protective film is peeled off from the glass substrate positioned on the upper layer along with the thin film.

In this configuration, as with the configuration described above, cullets do not adhere to the glass substrate even when produced during scribing, and the glass substrate is not scratched. Furthermore, the bonded substrate is effectively protected from direct contact with the scribing table during scribing by the first and second protective films applied to the glass substrate on the lower side. By finally peeling off the second protective film, the thin film is also peeled off from the glass substrate, and therefore cullets remaining on the glass substrate are removed along with the second protective film, thus maintaining a clean glass substrate surface.

A bonded substrate scribe-breaking method (invention 9) of the present invention corresponding to claim 26 is a method for scribe-breaking a bonded substrate in which a glass substrate and a silicon substrate are bonded together, and includes a step of scribing the glass substrate to which a thin film has been applied.

With this configuration, in invention 9, as with invention 8, cullets produced in the scribing process to not adhere to the glass substrate.

This configuration may include, after the step of scribing, a step of applying a protective film to the thin film on the glass substrate of the upper layer that is thicker than and has a greater adhesive strength than the thin film, and peeling off the protective film from the glass substrate along with the thin film after going through a predetermined process.

With this configuration, the cullets produced during scribing adhere to the protective film, and are removed along with the thin film when the protective film is peeled off.

In this configuration, after a thin film is applied to the glass substrate, a vertical crack is formed that reaches to a lower surface of the glass substrate of the upper layer by scribing from the thin film side of the glass substrate of the upper layer while the silicon substrate is positioned as the lower layer, and then, a protective film that is thicker than, and has a greater adhesive strength than the thin film is applied to the thin film on the glass substrate of the upper layer, and the bonded substrate is turned over so that the silicon substrate of the lower layer becomes the upper layer side, and after scribing the silicon substrate positioned as the upper layer, the bonded substrate is turned over so that the silicon substrate becomes the lower layer side, and a vertical crack is formed in the silicon substrate by applying pressure to the glass substrate positioned on the upper layer.

In this configuration, a silicon substrate is used as one of the substrates that makes up the bonded substrate, and therefore is not affected by the cullets produced during scribing. A thin film is applied only to the glass substrate side, and as scribing is performed in this state, cullets produced during scribing do not adhere to the glass substrate, and the glass substrate is not scratched. Further still, a protective film is applied for removing cullets, and as the thin film is also peeled off from the glass substrate when the protective film is peeled off, cullets can be removed. Furthermore, the protective film protects the bonded substrate from direct contact with the scribing table during scribing, and from direct contact with the breaking table when pressure is applied during the breaking operation.

Furthermore, in this configuration, a cutter wheel is used as a means for performing the above-described scribing, and a first cutter wheel provided with grooves along the entire periphery of the blade-edge ridge, or a second cutter wheel in which an area with grooves and an area without grooves are formed at a predetermined proportion may be selectively used as the cutter wheel.

It is possible to scribe-break substrates of a brittle material by using these cutter wheels. Further still, when using the first cutter wheel, a vertical crack that reaches to the lower surface of a glass substrate can be obtained. On the other hand, when using the second cutter wheel, a vertical crack with periodically varied depths can be obtained.

### Cutter wheel producing apparatus

A cutter wheel producing apparatus (invention 10) of the present invention corresponding claim 30 is a cutter wheel producing apparatus for manufacturing the cutter wheel of the present invention described above, and includes at least one rotatably supported, disk-shaped grinding member, and a grinding mechanism that supports at least one cutter wheel subjected to grinding, and brings in contact and moves away the cutter wheel in regard to the grinding member, wherein the grinding mechanism is provided with a rotation means for moving a portion of the cutter wheel being grinded by the grinding member.

It is preferable that the cutter wheel producing apparatus of invention 10 includes a contacting/removal means for bringing in contact and moving away the grinding mechanism in regard to the grinding member, and a control means for controlling the means for bringing in contact and moving away, and the rotation means.

Furthermore, for the cutter wheel producing apparatus of invention 10, it is preferable that the control means controls the rotation means by a number of divisions and a number of areas of the entire periphery of ridge portion of the cutter wheel, and forms a groove portion at a desired location of the ridge portion.

### Cutter wheel manufacturing method

A cutter wheel manufacturing method (invention 11) of the present invention corresponding to claim 33 is a cutter wheel manufacturing method for manufacturing the cutter wheel of the present invention described above, wherein an outer periphery of the cutter wheel is processed at a predetermined position and until a predetermined depth using at least one rotatably supported, disk-shaped grinding member; and a grinding mechanism that supports at least one cutter wheel subjected to grinding, and alternately brings in contact and moves away the cutter wheel from the grinding member.

### BRIEF DESCRIPTION OF DRAWINGS

FIG. 1 is a front view of the external appearance of a cutter wheel according to the present invention.
FIG. 2(a) is a front view of a cutter wheel formed with a projection at the blade-edge ridge. And FIG. 2(b) is a lateral view with an enlarged view of a portion of the same wheel.
FIG. 3 is an enlarged view of a portion showing another embodiment of the cutter wheel of FIG. 2(b) formed with a projection at the blade-edge ridge.
FIG. 4 is an enlarged view of a portion showing still another embodiment of the cutter wheel of FIG. 2(b) formed with a projection at the blade-edge ridge.
FIG. 5 is an enlarged view of a portion showing still another embodiment of the cutter wheel of FIG. 2(b) formed with a projection at the blade-edge ridge.
FIG. 6 is a front view of an embodiment of a cutter wheel in which a shaft is formed integrally with the wheel as a protrusion at both sides of the wheel.
FIG. 7 is a front view of a conventional glass cutter wheel.
FIG. 8 is a lateral view of a cutter wheel that shows Embodiment 1 of the present invention.
FIG. 9 includes lateral views of cutter wheels that show other embodiments of the present invention.
FIG. 10 is a lateral view of a cutter wheel of Working Example 1.
FIG. 11 is a lateral view of a cutter wheel of Working Example 2.
FIG. 12 is a lateral view of a cutter wheel of Working Example 3.
FIG. 13 is a lateral view of a cutter wheel of Working Example 4.
FIG. 14 is a lateral view of a cutter wheel of Working Example 5.
FIG. 15 shows scribing conditions of a cutter wheel according to the present invention.
FIG. 16 is a cross section of a crack produced when scribing a glass panel with a cutter wheel formed with protrusions on the blade-edge ridge.
FIG. 17 is an outline front view of an embodiment of a scribing apparatus according to the present invention.
FIG. 18 is a lateral view of the scribing apparatus shown in FIG. 17.
FIG. 19 is a top view of an outline configuration of a cutter wheel producing apparatus.
FIG. 20 is shows an example of a touch panel that is provided with an operation portion of a cutter wheel producing apparatus.
FIG. 21 shows an example of a signal tower provided with a cutter wheel producing apparatus.
FIG. 22 is a flowchart for explaining the grinding process of a cutter wheel.
FIG. 23 shows the appearance of a vertical crack at the time of scribing with a cutter wheel of the present invention.
FIG. 24 shows a scribe-breaking procedure of a scribing apparatus equipped with a cutter wheel of the present invention.
FIG. 25 shows another scribe-breaking procedure of a scribing apparatus equipped with a cutter wheel of the present invention.
FIG. 26 includes process drawings of an embodiment of a scribe-breaking procedure of the present invention.
FIG. 27 includes layout drawings of scribe-breaking lines for explaining embodiments of scribe-breaking line processes of the present invention.
FIG. 28 shows conditions when scribing with a conventional cutter wheel.
FIG. 29(a) is a front view of a glass cutter wheel formed with grooves on the blade-edge ridge portion, and FIG. 29(b) is a lateral view of the same wheel.
FIG. 30 includes process drawings of a conventional, general scribe-breaking procedure for bonded glass.
FIG. 31 shows another conventional scribe-breaking procedure for bonded glass.

### BEST MODE FOR CARRYING OUT THE INVENTION

Referring to the accompanying drawings, the following is an explanation of embodiments of the present invention.

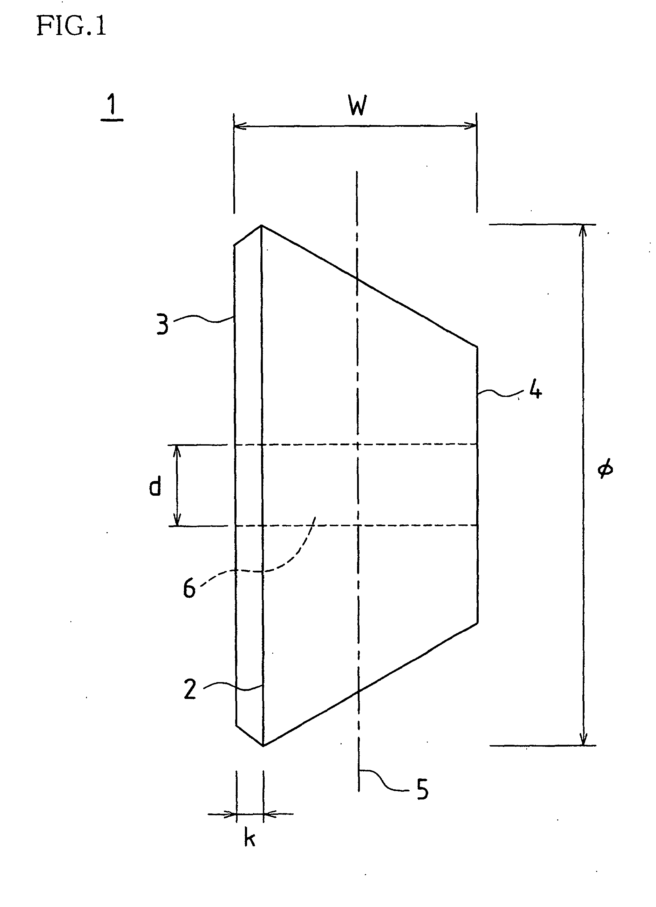

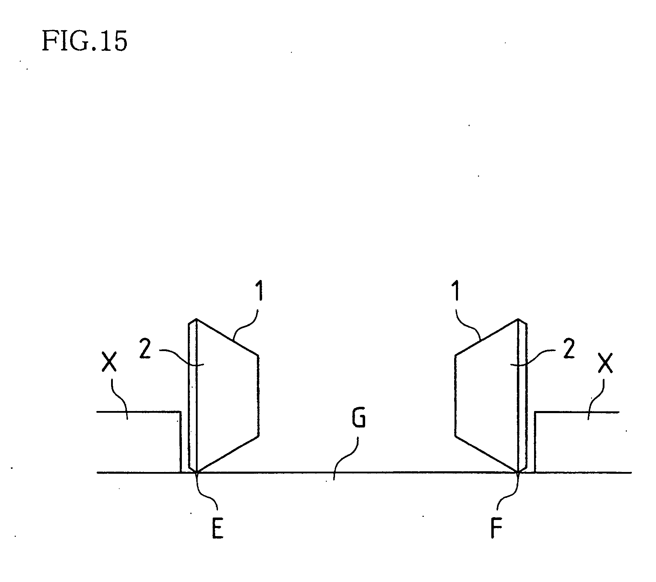

FIG. 1 is a front view of a cutter wheel according to an embodiment of the present invention, and FIG. 15 is a front view of the scribing condition of the cutter wheel shown in FIG. 1.

The cutter wheel 1 is formed by a blade-edge ridge 2 that is displaced to one side of a center 5 between wheel side-faces 3 and 4 (to the left side-face 3 in the example of the drawing), and an insertion through-hole 6 at the center of the wheel. The larger the extent of displacement of the blade-edge ridge 2, that is, the greater the distance from the center 5 to the blade-edge ridge 2, or in other words, the smaller the distance between the left-side face 3 and the blade-edge ridge 2 in the example of the drawing, the more preferable when scribing, as scribing can be performed closer to the convex portion or the thin film X of the device as shown in FIG. 15. The dimensions of the cutter wheel 1 such as this includes, for example, a wheel thickness w of 0.65 mm, a blade-edge ridge 2 radius φ of 2 to 3 mm; a distance k from the wheel's left-side face 3 and the blade-edge ridge 2 of 30 to 150 µm, and an inner diameter d of the insertion through-hole 6 of 0.8 mm, but there is no limitation to these dimensions. It should be noted that the reference letter G in FIG. 15 refers to a brittle substrate.

In scribing the brittle substrate G with such a cutter wheel 1, the cutter wheel 1 is applied to the brittle substrate G so that the cutter wheel 1 opposes the convex portion or thin film X of the device on the side that is closer to the blade-edge ridge 2, as shown in FIG. 15. Here the devices X are arranged on the brittle material substrate G in a matrix shape, so that scribing is performed along one row of devices in the immediate vicinity of the convex portion or the thin film X of those devices. And once a single scribe line E is formed, the cutter wheel 1 is rotated by 180 degrees, and scribing is performed along a row of devices adjacent to the previous row in the immediate vicinity of the convex portion or the thin film X of those devices, thus forming a subsequent scribe line F.

In scribing, other than rotating the cutter wheel 1 by 180 degrees in this way each time the forming of a scribe line is completed, two cutter wheels 1 can be arranged in a relationship such as in FIG. 15, that is, a tip holder (omitted from figure) may be used so that two cutter wheels 1 can be arranged parallel, and with alternate blade-edge ridges 2 arranged as far as possible from each other. When using two cutter wheels 1 in this way, it becomes possible to simultaneously scribe locations E and F near the respective portions and thin films X of adjacent devices merely by running the scribe head one time between the devices, so that it becomes unnecessary to rotate the cutter wheel 1 by 180 degrees each time a scribe line is formed as described above, thus improving operability. Furthermore, with an operation program, the two cutter wheels 1 are able to selectively scribe simultaneously or separately.

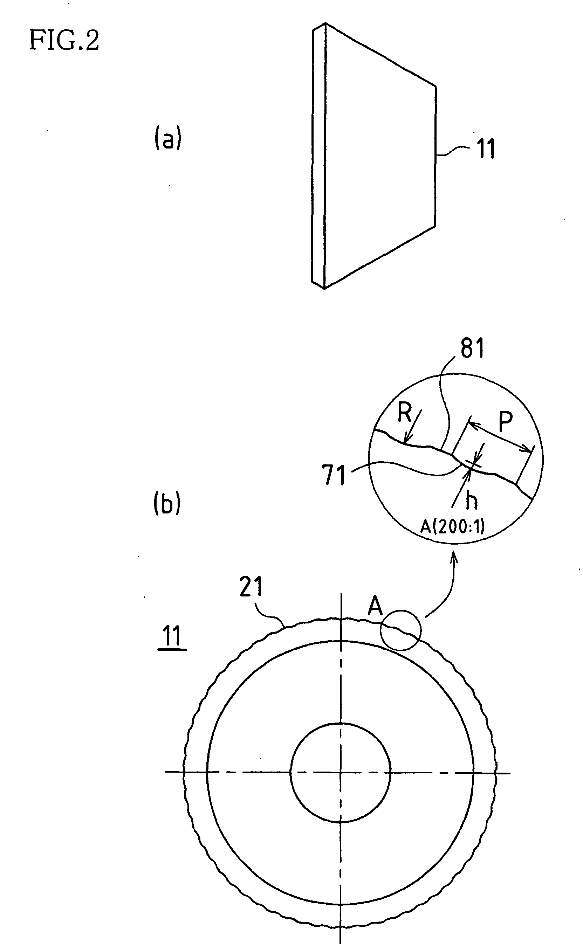

Next, FIG. 2(a) is a front view of a cutter wheel provided with protrusions at the blade-edge ridge. And FIG. 2(b) is a lateral view with an enlarged view of a portion of the same wheel. Here protrusions 81 of a height h are obtained with an interval at a pitch P by cutting out U-shaped grooves 71 at a blade-edge ridge 21 of a cutter wheel 11 as shown in the enlarged view A.

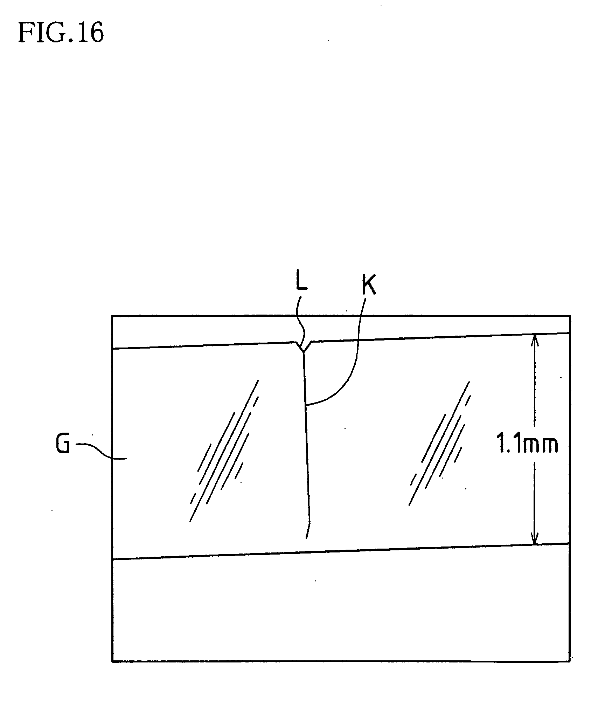

The wheel 11 shown in the example here has a wheel diameter (φ) of 2.5 mm, a wheel thickness (w) of 0.65 mm, a blade-edge angle (θ) of 125°, a number of protrusions of 125, a projection height (h) of 5 µm, and a pitch (P) of 63 µm. FIG. 16 shows a cross section of glass at the time of scribing using the glass cutter wheel 11 under the conditions of a blade-edge pressure of 2.6 Kgf, and a scribing speed of 300 mm/sec on a 1.1 mm thick glass panel.

In FIG. 16, the cavity L on the surface of the glass panel G is a groove produced on the glass when scribing, and this is called a scribe line (this line extends vertically to the paper plane). At the same time of the inscribing of the scribe line L, a crack (vertical crack) K is produced that extends directly down from the scribe line L, but in this case a long crack (actual measurement of 962 µm) is produced that almost passes through the glass panel G in the thickness direction.

In this way, a cutter wheel 11 provided with a projection 81 of the present invention is able to obtain a long vertical crack K with a depth proportional to the applied load, without producing horizontal cracks even when the blade-edge pressure is large. With a long vertical crack K, precise breaking can be performed along the scribe line in the breaking operation of the subsequent step, thus improving yield. Furthermore, as the breaking operation is made easier, the requirements of the breaking process can be relaxed or simplified, and depending on the situation it is also possible to eliminate the breaking process.

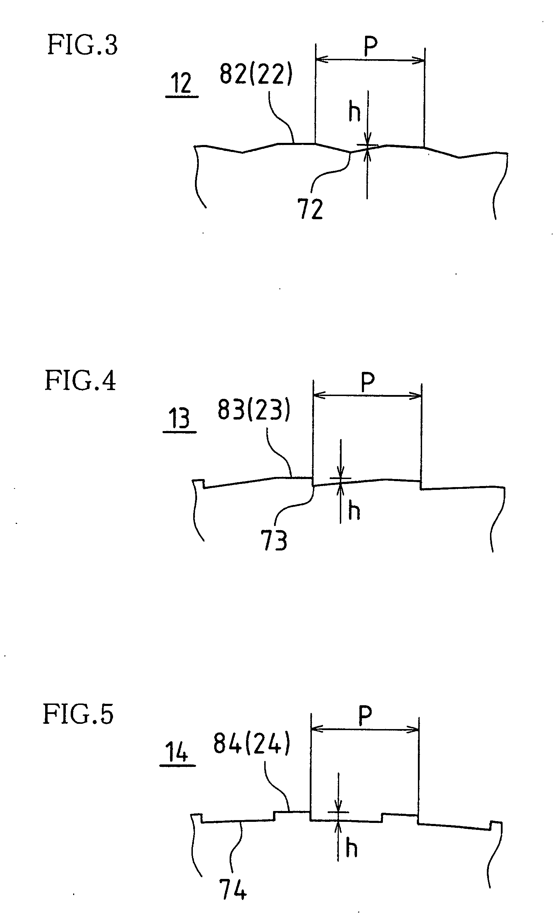

FIG. 3 shows an example of protrusions 82 that have a form different from that described above. The protrusions 82 are formed by cutting away V-shaped grooves 72 at the blade-edge ridge 22.

FIG. 4 shows an example of protrusions 83 that have a form which is again different from that described above. The protrusions 83 are formed by cutting away serrated-shape grooves 73 at the blade-edge ridge 23.

FIG. 5 shows an example of protrusions 84 that have a form which is once again different from that described above. The protrusions 84 are formed by cutting away rectangular-shaped grooves 74 at the blade-edge ridge 24.

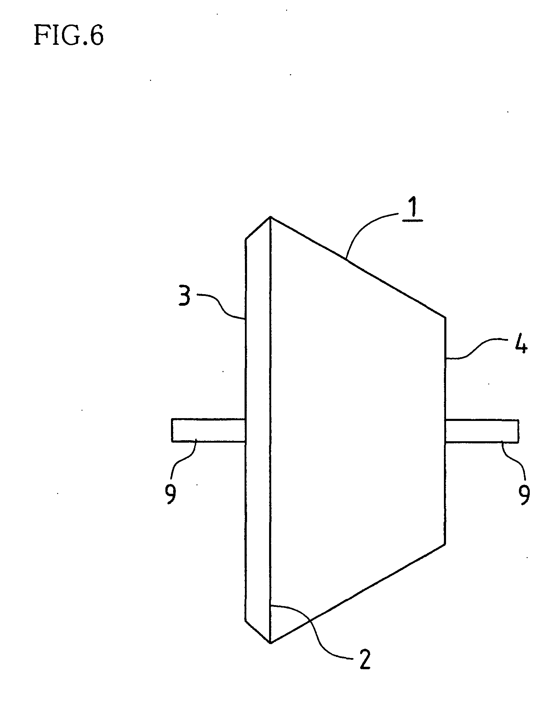

The above-described cutter wheel 1 has an insertion through-hole 6, and a shaft (omitted from figure) is inserted through the insertion through-hole 6 and fitted at a tip holder of a scribe head not shown in the figure, but as shown in FIG. 6, a shaft 9 may be provided integrally with the wheel protruding from the wheel side-faces 3 and 4.

In this case, control of the shaft becomes easy. That is, when using the cutter wheel 1, a shaft passes through the insertion through-hole 6 provided at the center of the cutter wheel 1, and the wheel diameter is small being several millimeters, and therefore the shaft diameter can be smaller than 1 millimeter. And is this way, although fine control of the shaft is complicated, shaft control is easier when the shaft 9 is integrated with the wheel.

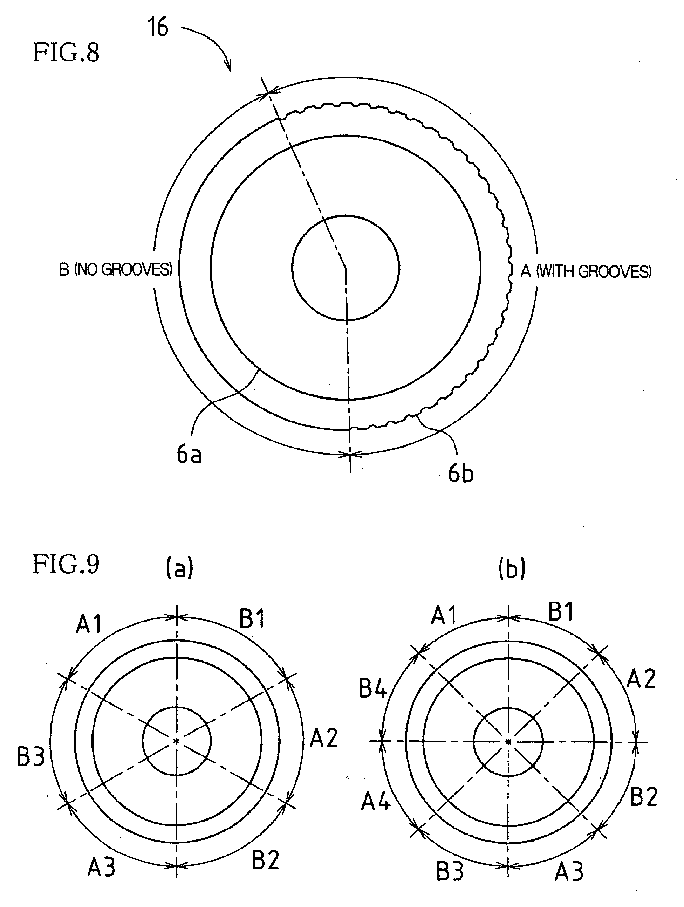

FIG. 8 is a lateral view of a cutter wheel 16 of invention 2 of this embodiment.

As shown in FIG. 8, the cutter wheel 6 is provided with an area A in which grooves are formed at the blade-edge ridge portion, and an area B in which grooves are not formed. In consideration of the workability of forming grooves at the ridge of the cutter wheel 16, it is preferable that the proportion of the area A in which such grooves are formed to the entire periphery of the ridge portion (area A + area B) (hereafter "proportion of area A to the entire periphery") is not greater than three-quarters. With such proportions, a cutter wheel with superior workability can be achieved without requiring a long processing time for forming grooves.

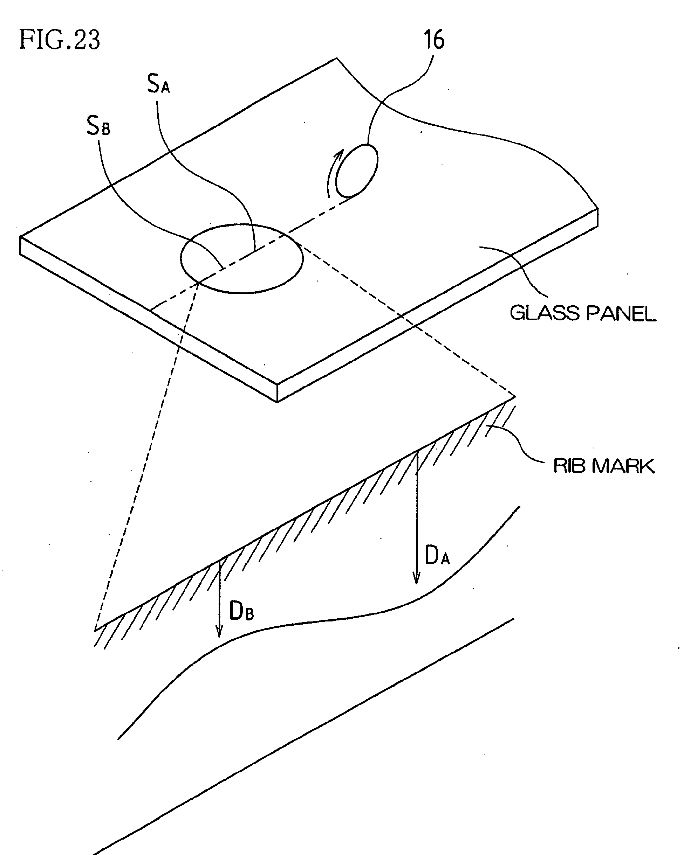

Furthermore, when the proportion of area A to the entire periphery is not greater than three-quarters, but is an area that extends more than one-quarter, a vertical crack in which the depth is periodically varied can be obtained as shown in FIG. 23, which will be discussed later. However, when the proportion of area A to the entire periphery is in this range, it is necessary to ensure limited conditions to obtain the above-described periodical crack.

In contrast to this, when the proportion of area A to the entire periphery is an area not greater than one-quarter, a vertical crack in which the depth is periodically varied can be consistently obtained under wider conditions. Setting the proportion of area A to the entire periphery to this area is appropriate in the case of transporting a brittle substrate on which a scribe line is formed in order to prevent the occurrence of problems such as a portion of the brittle material substrate scribe-breaking and falling during transport.

The grooves 6b formed at the area A of the ridge portion are intentionally machined at the micron order intentionally periodically, and are different from the grinding marks of the submicron order that are inevitably formed during the grinding process that forms the blade-edge ridge.

FIG. 9 shows examples of other embodiments of glass cutter wheels. FIG. 9(a) shows a cutter wheel with the entire periphery of the blade-edge divided into six areas, and set up so that the areas A and areas B are formed alternately. FIG. 9(b) shows a cutter wheel with the entire periphery of the blade-edge divided into eight areas, and set up so that the areas A and areas B are formed alternately.

In FIG. 9(b), the areas A in which grooves are formed are formed along a plurality of areas A1 to A4, and the areas B in which grooves are not formed are formed along a plurality of areas B1 to B4. For example, the lengths of the areas A1 to A4 and B1 to B4 are set up so that:
A1 = A2 = A3 = A4 A1 + A2 + A3+ A4 = A
B1 = B2 = B3 = B4 B1 + B2 + B3+ B4 = B
A / B = 1
In this case, the areas A1 to A4 are all equivalent, and B1 to B4 are also all equivalent. Furthermore, as A/ B = 1, the proportion of area A to the entire periphery is 2 / 4.

Furthermore, another example is set up so that:
A1 = A2 ≠ A3 ≠ A4 A1 +A2 +A3+ A4 = A
B1 = B2 ≠ B3 ≠ B4 B1 + B2 + B3+ B4 = B
A / B = 1
In this case, in the areas A1 to A4 and B1 to B4, A3 and A4 are different from A1 and A2, also B3 and B4 are different from B1 and B2. Furthermore, as A / B = 1 overall, the proportion of area A to the entire periphery is 2 / 4.

Further still, another example is set up so that:
A1 = A2 ≠ A3 ≠ A4 A1 +A2 +A3+A4 =A
B1 = B2 ≠ B3 ≠ B4 B1 + B2 + B3+ B4 = B
A / B = 1
In this case, in the areas A1 to A4 and B1 to B4, A3 and A4 are different from A1 and A2, also B3 and B4 are different from B1 and B2. Furthermore, as A / B = 3 / 1 overall, the proportion of area A to the entire periphery is 3 / 4.

The cutter wheel 16 may be formed integrally with the shaft that passes through the wheel 16. Methods that may be used for such integral forming include a method in which a wheel and a shaft are grinded into an integral item from a raw material, and a method in which a blade-edge and a shaft are adhered or soldered together.

FIG. 23 shows a schematic outline of a vertical crack produced in a glass substrate when a scribe line is formed in the glass substrate using the above-described cutter wheel 16.

The scribe line produced by scribing using the cutter wheel 16 has different vertical crack depths in the scribe line S_{A} formed by a groove formed by areas A, and in the scribe line S_{B} formed by a groove formed by areas B in the cutter wheel ridge portion, and this is confirmed in the scribe line darkness. That is, it is confirmed that, with the scribe line S_{A}, a deep vertical crack D_{A} is formed by the depressions and protrusions formed at the ridge portion, and with the scribe line SB, a shallow vertical crack D_{B} is formed because depressions and protrusions are not formed at the ridge portion.

In this way, as the depth of the vertical crack is periodically varied in scribing using the cutter wheel 16 of this embodiment, the scribing performance of this embodiment can be understood to be intermediate to the scribing performance of the conventional cutter wheel 72 of FIG. 7 and the scribing performance of the cutter wheel 11 of FIG. 2. Further still, by changing as appropriate the proportions of the area A, in which grooves are formed, and the area B, in which grooves are not formed, to the entire periphery of the cutter wheel, desired scribing characteristics are obtained, that is, a line (scribe line) of a desired vertical crack for scribe-breaking a glass substrate is obtained.

The following is an explanation of Working Examples 1 to 5 showing specific examples of cutter wheels of this embodiment.

### Working Example 1

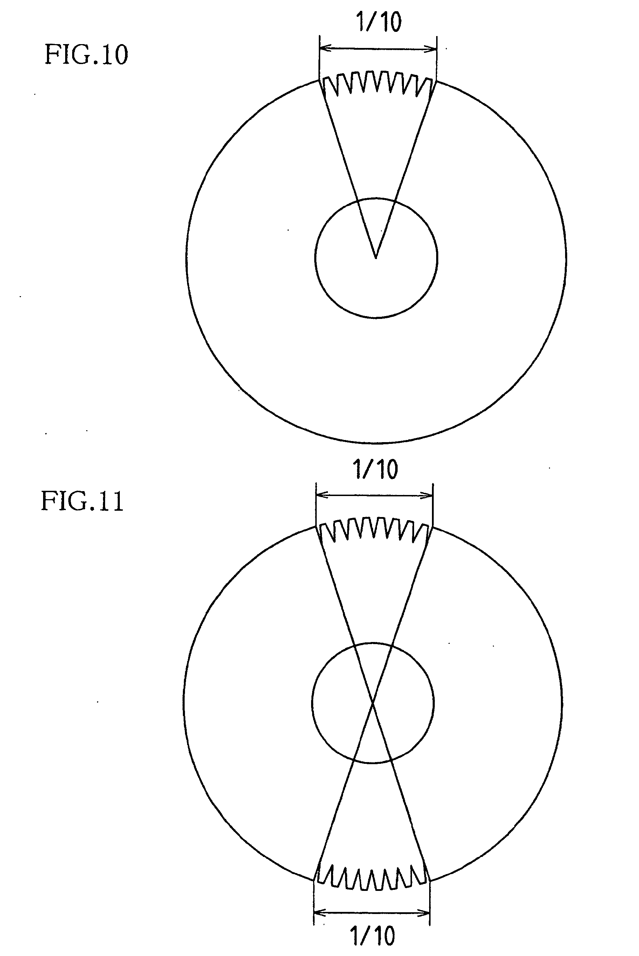

FIG. 10 shows an embodiment of a cutter wheel according to Working Example 1, and Table 2 below shows dimensions such as the wheel diameter of the cutter wheel of the Working Example 1.

**Table 2**

| | |
|---|---|
| Wheel diameter φ | 2.0 mm |
| Wheel thickness W | 0.65 mm |
| Blade-edge angle α | 135° |
| Groove depth | 7 µm |

The cutter wheel 16 of Working Example 1 is set up so that a portion in one location of one-tenth (8/80ths) of the total length of the circumference of the ridge portion is formed with consecutive grooves of the same depth (7 µm).

Using this cutter wheel 16, scribing was performed on a 0.7-mm thick non-alkali glass with a blade-edge pressure of 0.16 to 0.40 MPa, and a scribing speed of 400 mm/sec. In the scribing using the cutter wheel 16 of Working Example 1, a scribe line was formed as shown in FIG. 23 with a vertical crack of a periodically varied depth. When using a pressure of 0.18 MPa, the deep vertical crack D_{A} of FIG. 7 was approximately 400 µm, and the shallow vertical crack D_{B} was approximately 100 µm.

### Working Example 2

FIG. 11 shows an embodiment of a cutter wheel 16 according to a Working Example 2, and Table 3 below shows dimensions such as the wheel diameter of the cutter wheel of FIG. 7.

**Table 3**

| | |
|---|---|
| Wheel diameter φ | 2.0 mm |
| Wheel thickness W | 0.65 mm |
| Blade-edge angle α | 135° |
| Groove depth | 7 µm |

At two locations each of one-tenth (8/80ths) of the total length of the circumference of the ridge portion, the cutter wheel 16 of Working Example 2 is provided with areas A1 and A2 that are formed with consecutive grooves of the same depth (7 µm). The areas A1 and A2 formed by these grooves are set up so that they are on opposite sides of center axes of the cutter wheel 16.

Using this cutter wheel 16, scribing was performed on a 0.7-mm thick non-alkali glass with a blade-edge pressure of 0.16 to 0.40 MPa, and a scribing speed of 400 mm/sec. In the scribing using the cutter wheel 16 of Working Example 2, a scribe line was formed as shown in FIG. 23 with a vertical crack of a periodically varied depth. When using a pressure of 0.20 MPa, the deep vertical crack D_{A} of FIG. 23 was approximately 400 µm, and the shallow vertical crack D_{B} was approximately 100 µm.

### Working Example 3

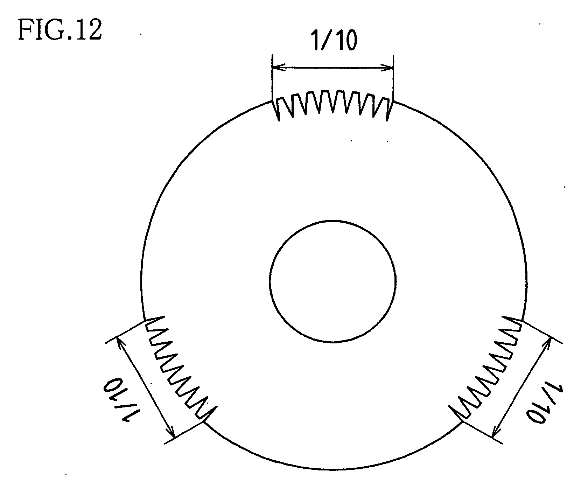

FIG. 12 shows an embodiment of a cutter wheel 16 according to a Working Example 3, and Table 4 below shows dimensions such as the wheel diameter of the cutter wheel 16 of Working Example 3.

**Table 4**

| | |
|---|---|
| Wheel diameter φ | 2.0 mm |
| Wheel thickness W | 0.65 mm |
| Blade-edge angle α | 135° |
| Groove depth | 7 µm |

At three locations each of one-tenth (3/80ths) of the total length of the circumference of the ridge portion, the cutter wheel 16 of Working Example 3 is provided with areas A1, A2, and A3 that are formed with consecutive grooves of the same depth (7 µm). The areas A1, A2, and A3 are respectively set up at equivalent intervals.

Using this cutter wheel 16, scribing was performed on a 0.7-mm thick non-alkali glass with a blade-edge pressure of 0.16 to 0.40 MPa, and a scribing speed of 400 mm/sec. In the scribing using the cutter wheel 16 of Working Example 3, a scribe line was formed as shown in FIG. 23 with a vertical crack of a periodically varied depth. When using a pressure of 0.20 MPa, the deep vertical crack D_{A} of FIG. 23 was approximately 400 µm, and the shallow vertical crack D_{B} was approximately 100 µm.

### Working Example 4

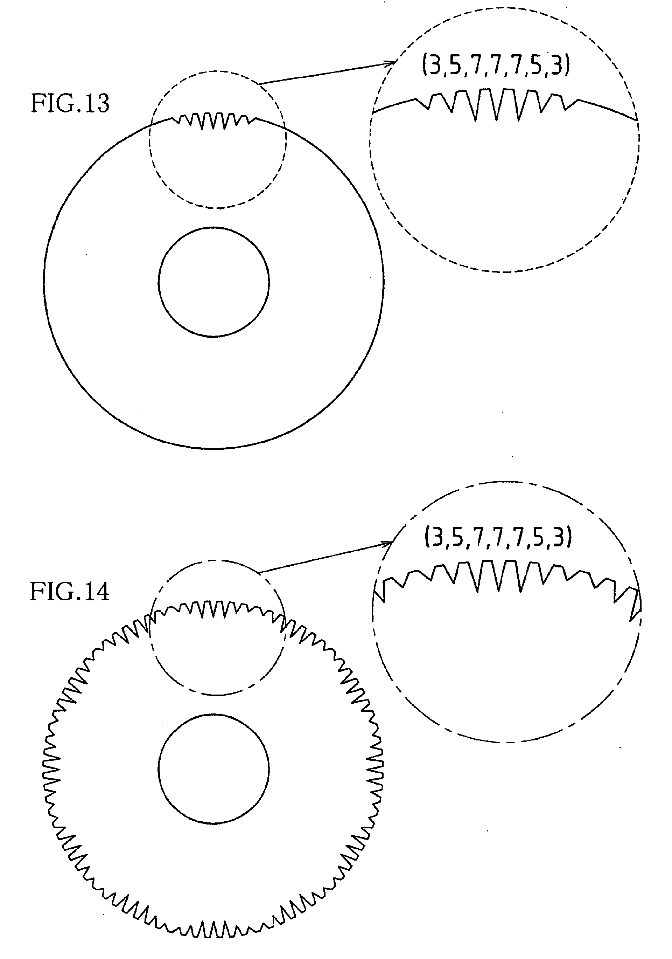

FIG. 13 shows an embodiment of a cutter wheel 16 according to a Working Example 4, and Table 5 below shows dimensions such as the wheel diameter of the cutter wheel 16 of Working Example 4.

**Table 5**

| | |
|---|---|
| Wheel diameter φ | 2.0 mm |
| Wheel thickness W | 0.65 mm |
| Blade-edge angle α | 135° |
| Groove depth | 3, 5, 7, 7, 7, 5, 3 µm |

At one location of one-tenth (8/80ths) of the total length of the circumference of the ridge portion, the cutter wheel 16 of Working Example 4 is provided with an area A1 that is formed with consecutive grooves. The area A1 is formed with seven grooves, and the depths of the respective grooves are different, set up in order 3, 5, 7, 7, 7, 5, and 3 µm.

Using this cutter wheel 16, scribing was performed on a 0.7-mm thick non-alkali glass with a blade-edge pressure of 0.16 to 0.40 MPa, and a scribing speed of 400 mm/sec. In the scribing using the glass cutter wheel 16 of Working Example 4, a scribe line was formed as shown in FIG. 23 with a vertical crack of a periodically varied depth. When using a pressure of 0.22 MPa, the deep vertical crack D_{A} of FIG. 23 was approximately 400 µm, and the shallow vertical crack D_{B} was approximately 100 µm.

### Working Example 5

FIG. 14 shows an embodiment of a cutter wheel 16 according to a Working Example 5, and Table 6 below shows dimensions such as the wheel diameter of the cutter wheel 16 of Working Example 5.

**Table 6**

| | |
|---|---|
| Wheel diameter φ | 2.0 mm |
| Wheel thickness w | 0.65 mm |
| Blade-edge angle α | 140° |
| Number of portions | 106 |
| Groove depth | 3, 5, 7, 7, 7, 5, 3 µm |

The cutter wheel 16 of Working Example 5 is divided into 106 portions along the total length of the circumference of its ridge portion, and is set up with groove depths that are formed in the order 3, 5, 7, 7, 7, 5, and 3 µm.

Using this cutter wheel 16, scribing was performed on a 0.7-mm thick non-alkali glass with a blade-edge pressure of 0.16 to 0.40 MPa, and a scribing speed of 400 mm/sec. In the scribing using the cutter wheel of Working Example 5, a scribe line was formed as shown in FIG. 23 with a vertical crack of a periodically varied depth. When using a pressure of 0.29 MPa, the deep vertical crack D_{A} of FIG. 23 was approximately 400 µm, and the shallow vertical crack D_{B} was approximately 100 µm.

Furthermore, it is evident from the results of the Working Examples 1 to 5 that the pitch of the plurality of formed grooves is preferably 20 to 200 µm for a wheel diameter of 1 to 20 mm, and that the depth of the plurality of grooves is preferably 2 to 200 µm for a wheel diameter of 1 to 20 mm.

In the drawings used to explain the above-described cutter wheels of the present invention, the grooves that form the ridge of the cutter wheel have been drawn larger in order to facilitate understanding, but the grooves are actually of a size of the micron order that is not visible to the naked eye.

### Scribing Apparatuses

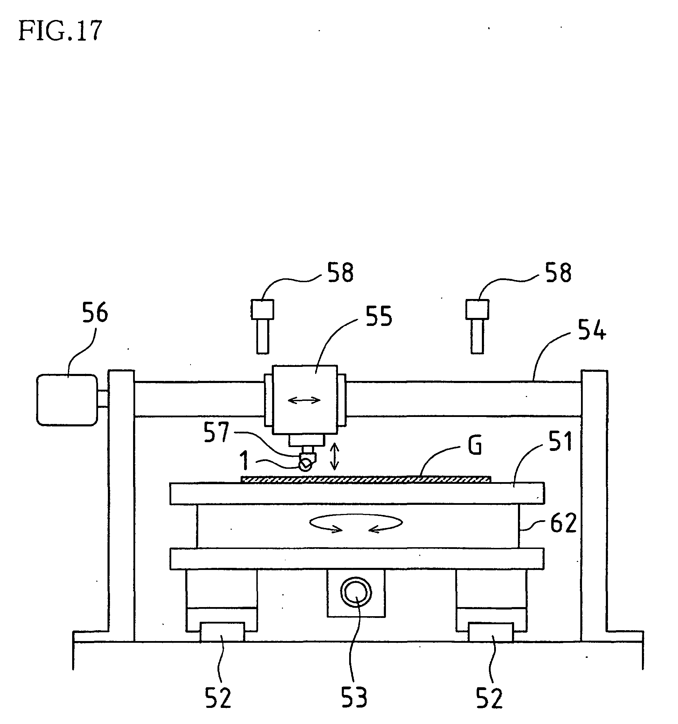

FIG. 17 is an outline front view showing one embodiment of a scribing device equipped with one of the above-described cutter wheels.

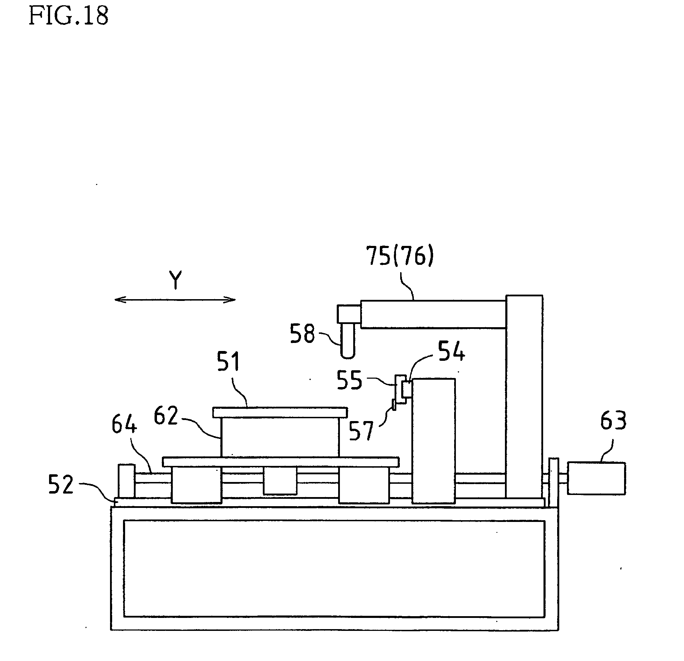

FIG. 18 is a lateral view of the scribing apparatus of FIG. 17.

This scribing apparatus is provided with: a horizontally rotatable table 51 that secures a mounted brittle material substrate G with a vacuum clamping means; a pair of parallel guide rails 52 that support the table 51 to enable movement in the Y direction (perpendicular to the paper plane); a ball screw 53 that moves the table 51 along the guide rails 52; a guide bar 54 erected above the table 51 along the X direction (left and right in this figure); a scribe head 55 arranged to be able to slide in the X direction on the guide bar 54; a motor 56 that causes the scribe head 55 to slide; a tip holder 57 arranged to be able to move up and down at the lower part of the scribe head 55 and to be freely swiveled; the above-mentioned cutter wheel 1 rotatably attached at the lower end of the tip holder 57; and a pair of CCD cameras 58 installed above the guide bar 54 that recognize an alignment mark indicated on the brittle material substrate G on the table 51. Furthermore, built into the scribe head 55 is a cutter wheel turning means that turns the chip holder 57 by 180 degrees so that the cutter wheel 1 is turned by 180 degrees upon completion of the formation of one scribe line.

Furthermore, instead of being arranged with the above-mentioned cutter wheel turning means, the scribing apparatus may be fitted with two tip holders 57 with two cutter wheels 1 side by side, and corresponding blade-edge ridges 2 attached so as to be in positions farthest away from each other. When using two such cutter wheels 1, it is possible to simultaneously scribe (see FIG. 15) locations A and B respectively near to the convex portions or films X of each adjacent device by running the scribe head only one time between the devices, and it becomes unnecessary to turn the cutter wheel 1 by 180 degrees each time a scribe line is formed as described above, thus improving operability.

Further still, with an operation program, the two cutter wheels 1 can selectively scribe simultaneously or separately, and an elevation means is built-in to the scribe head 55 that can raise and lower the two tip holders 57 separately.

### Bonded glass substrate scribe-breaking method

The following is an explanation of a method for scribe-breaking a bonded glass substrate using a scribe-breaking apparatus provided with a cutter wheel according to embodiments of the present invention.

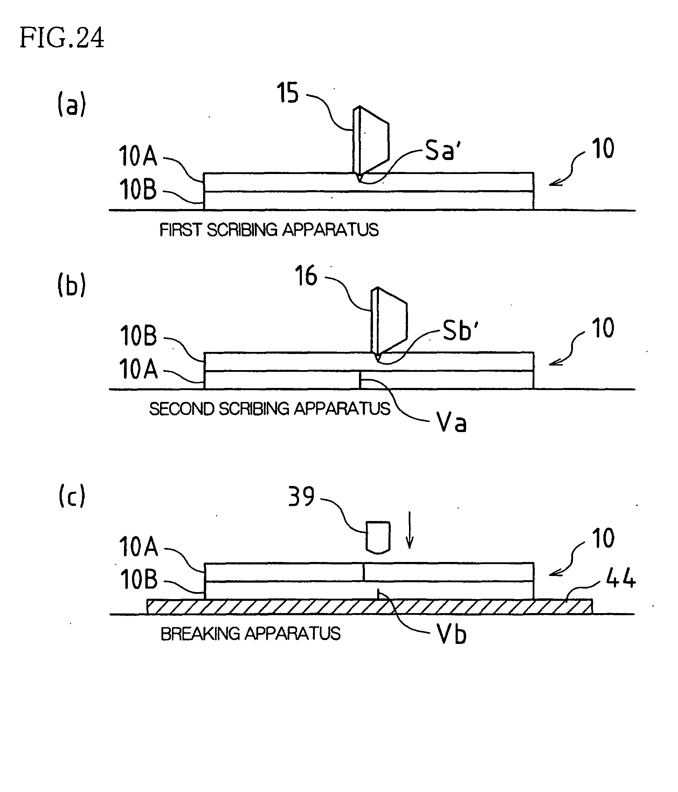

FIGS. 24(a) to (c) are cross sections that explain each step in a method of scribe-breaking a bonded glass substrate 10 using a scribe-breaking apparatus provided with a cutter wheel according to an embodiment of the present invention. It should be noted that, for convenience, the glass substrate of one side of the bonded glass substrate, which is a liquid crystal mother substrate, formed by bonded a pair of glass substrates facing together is taken as glass substrate 10A, and the glass substrate of the other side is taken as glass substrate 10B in the following explanation.
(1) First, as shown in FIG. 24(a), the bonded glass substrate 10 is mounted on a first scribing apparatus with the glass substrate 10A of the bonded glass substrate 10 facing up, and a scribe line Sa' is formed on the glass substrate 10A by scribing using the cutter wheel 15 in which the grooves shown in FIG. 2 are formed at the ridge of the cutter wheel of FIG. 1. As shown in FIG. 24(b), the scribe line Sa' formed using the glass cutter wheel 15 forms a deep vertical crack Va that reaches the vicinity of the lower surface of the glass substrate 10A.
(2) Next, the bonded glass substrate 10 on which the scribe line Sa' has been formed on the glass substrate 10A is turned over, and transported to a second scribing apparatus. Then, with this second scribing apparatus, and as shown in FIG. 24(b), a scribe line Sb' is formed parallel to the scribe line Sa' on the glass substrate 10B of the bonded glass substrate 10 by scribing using the glass cutter wheel 16 that has been formed with the grooves shown in FIG. 8 at the ridge of the cutter wheel 1 of FIG. 1. The second scribing device uses a cutter wheel described in any of the Working Examples 1 to 5, and the scribe line Sb' formed using this cutter wheel 16 forms a vertical crack Vb that includes a periodical alternation between shallowly formed portions and deeply formed portions. It should be noted that a plurality of liquid crystal panels are formed on the liquid crystal mother substrate, and as it is necessary to form terminals on one side of the periphery of the glass substrate on which each of the liquid crystal panels is formed, it is common that the scribe line Sb' formed on the glass substrate 10B and the scribe line Sa' formed on the glass substrate 10A are formed in shifted scribing positions in the horizontal direction.
(3) Next, the bonded glass substrate 10 with the scribe lines Sa' and Sb' formed respectively on the glass substrate 10A and the glass substrate 10B is turned over so that the upper and lower positions of the glass substrate 10A and the glass substrate 10B are reversed, and transported to a breaking apparatus with the glass substrate 10A facing up. As shown in FIG. 24(c), the bonded glass substrate 10 is mounted onto a mat 44 in the breaking apparatus, and a breaker bar 39 pushes the glass substrate 10A of the bonded glass substrate 10 along the scribe line Sb' formed on the glass substrate 10B. This extends a crack from the scribe line Sb' of the lower side glass substrate 10B in an upward direction, and breaks the glass substrate 10B along the scribe line Sb'.

By performing in order the steps (1) to (3), the bonded glass substrate 10 is cut.

As described above, the scribing of the cutter wheel 16 of the present invention forms a vertical crack Vb that includes a periodical alternation between shallowly formed portions and deeply formed portions, and the vertical crack Vb does not completely pass through the glass substrate in the thickness direction. Therefore, there is no risk in step (2) during the transporting of the bonded glass substrate 10 from the second scribing apparatus to the breaking apparatus of the bonded glass substrate 10 separating, even when the glass substrate 10A is completely scribe-broken, because the glass substrate 10A is bonded to the glass substrate 10B with a sealing agent.

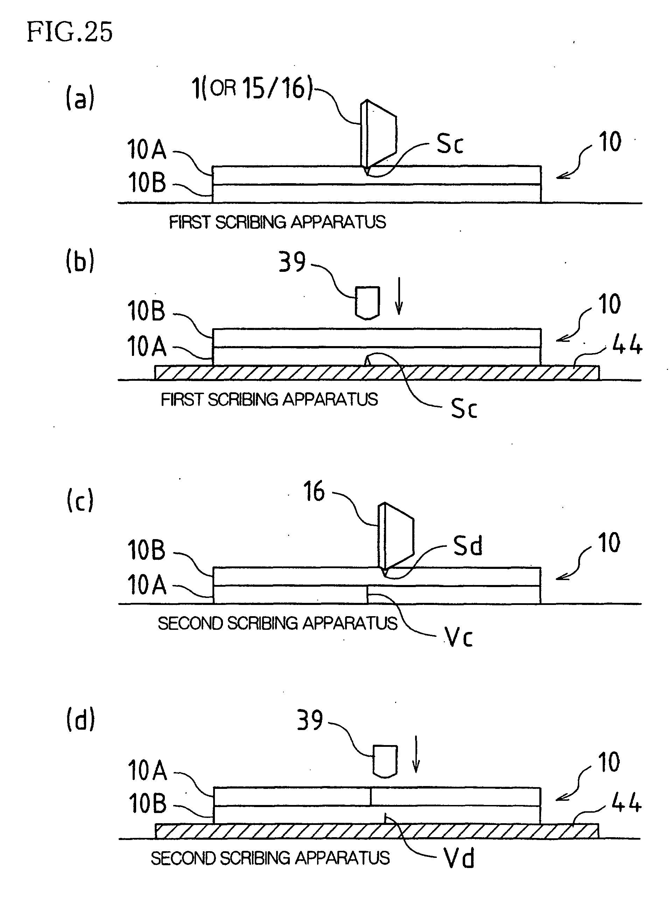

FIGS. 25(a) to (d) are cross sections that illustrate each step in a second method of scribe-breaking the bonded glass substrate 10 using a scribe-breaking apparatus provided with a glass cutter wheel 1 according to Embodiment 1 of the present invention. It should be noted that, for convenience, the glass substrate of one side of the bonded glass substrate, which is a liquid crystal mother substrate, formed by bonded a pair of glass substrates facing together is taken as glass substrate 10A, and the glass substrate of the other side is taken as glass substrate B in the following explanation.
(1) First, as shown in FIG. 25(a), the bonded glass substrate 10 is mounted on a first scribing apparatus with the glass substrate 10A of the bonded glass substrate 10 facing up, and a scribe line Sc is formed on the glass substrate 10A by scribing using the cutter wheel 1 (or 15/16).
(2) Next, the bonded glass substrate 10 on which the scribe line Sc has been formed on the glass substrate 10A is turned over, and transported to a first breaking apparatus.
   As shown in FIG. 25(b), the bonded glass substrate 10 is mounted onto a mat 44 in the first breaking apparatus, and a breaker bar 39 pushes the glass substrate 10B of the bonded glass substrate 10 along the scribe line Sc formed on the glass substrate 10A. This extends a crack from the scribe line Sc of the lower side glass substrate 10A in an upward direction, and breaks the glass substrate 10A along the scribe line Sc.
(3) Next, without turning over the glass substrate 10A and the glass substrate 10B, the bonded glass substrate 10 with the cut glass substrate 10A is transported to a second scribing apparatus. Then, with this second scribing apparatus, and as shown in FIG. 25(c), a scribe line Sd is formed parallel to the scribe line Sd on the glass substrate 10B of the bonded glass substrate by scribing using the cutter wheel 16. It should be noted that a plurality of liquid crystal panels are formed on the liquid crystal mother substrate, and as it is necessary to form terminals on one side of the periphery of the glass substrate on which each of the liquid crystal panels is formed, it is common that the scribe line Sd formed on the glass substrate 10B and the scribe line Sc formed on the glass substrate 10A are formed in shifted scribing positions in the horizontal direction.
(4) Next, the bonded glass substrate 10 is turned over, and transported to a second breaking apparatus with the glass substrate 10A facing up. As shown in FIG. 25(d), the bonded glass substrate is mounted onto a mat 44 in the second breaking device, and a breaker bar 39 pushes the glass substrate 10A of the bonded glass substrate 10 along the scribe line Sd formed on the glass substrate 10B. This extends a crack from the scribe line Sd of the lower side glass substrate 10B in an upward direction, and breaks the glass substrate 10B along the scribe line Sd. The vertical crack formed by the scribe line Sd on the glass substrate 10B in step (3) is shown as Vd in FIG. 25(d).

As described above, the scribing of the glass cutter wheel 16 of the present invention forms a vertical crack Vd that includes a periodical alternation between shallowly formed portions and deeply formed portions, and the vertical crack Vd does not completely pass through the glass substrate in the thickness direction. Therefore, during the transporting in step (4) of the bonded glass substrate 10 from the second scribing apparatus to the second breaking apparatus, even when the glass substrate 10A is completely scribe-broken, the glass substrate 10B does not become scribe-broken, and there is no risk of the bonded glass substrate 10 being scribe-broken.

Scribing methods for bonded glass substrates have been described above, but the scribing methods of the present invention may be used to scribe other brittle materials in special situations, and in such a situation, a vertical crack that includes periodically varied shallowly formed portions and deeply formed portions can be formed on other brittle materials. And by forming a vertical crack that includes periodically varied depths, complete scribe-breaking of the brittle material does not occur during transportation and the material can be sent to the next process.

### Scribe-breaking method (1) for other bonded substrates

### Working Example 1

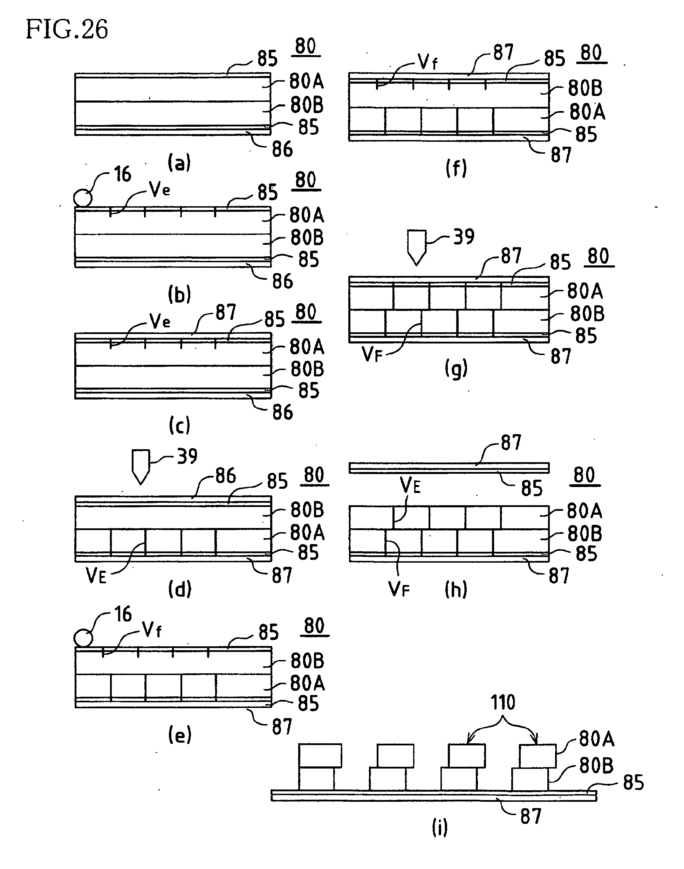

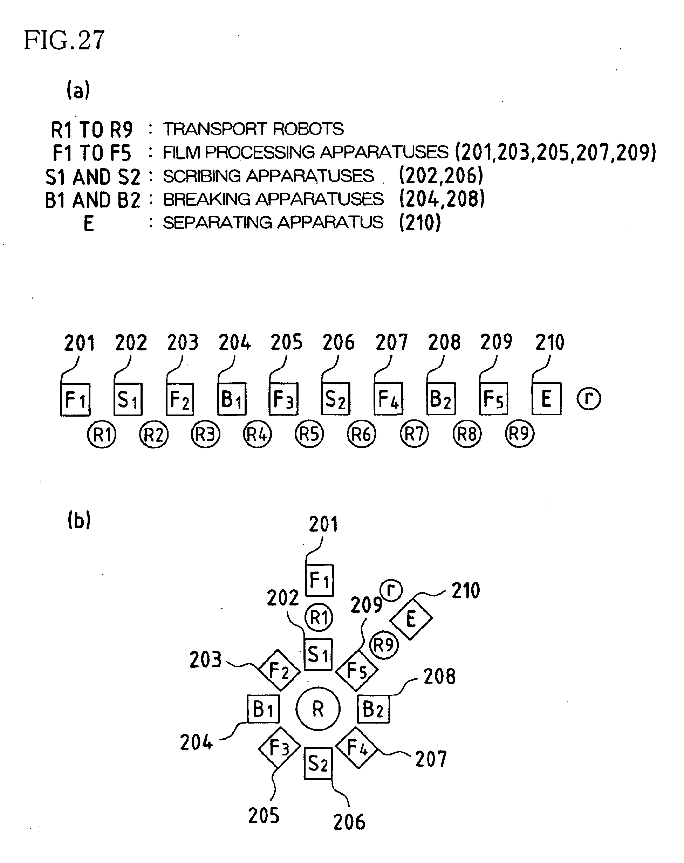

FIGS. 26(a) to (i) are process drawings for describing Working Example 1 of the present invention. Furthermore, FIG. 27 includes schematic drawings that show a configuration of the apparatuses used in such a process. FIG. 27(a) shows an example in which the apparatuses of the process are configured in a simplified line. And FIG. 27(b) is an example in which the apparatuses are configured around a transport robot. The present invention is applied to a method of scribe-breaking a flat display panel mother glass substrate 80 formed by bonded together glass substrates that are one kind of a brittle material substrate. The glass substrate on one side of the flat display panel mother glass substrate 80 is taken as glass substrate 80A, and the glass substrate on the other side is taken as glass substrate 80B, and the material of the glass of the glass substrate 80A and the glass substrate 80B is non-alkali glass for example. Furthermore, the cutter wheel used is the cutter wheel 16 of FIG. 8 that can achieve a vertical crack with periodically varied depths in a glass substrate.
(1) First, a first film processing apparatus 201 that is provided with the same mechanisms as the application mechanisms used in apparatus for applying polarizing plates in the manufacturing processes of liquid crystal mother glass substrates applies, as shown in FIG. 26(a), a thin film 85 to both sides of the flat display panel mother glass substrate 80. It is preferable that the thin film 85 is applied prior to the scribe-breaking of the substrate, and that it has a thickness of approximately 10 µm. Furthermore, a first protective film 86 having a greater thickness and a lesser adhesive strength compared to the film 85 is applied to the thin film 85 of the lower layer glass substrate 80B. It should be noted that the thickness of the first protective film 86 is in the range from 40 to 80 µm.
(2) Next, the flat display panel mother glass substrate 80 is transported by a transport robot R1 to a first scribing d apparatus 202, and as shown in FIG. 26(b), shallow vertical cracks Ve with periodically varied depths are formed on the upper layer glass substrate 80A by scribing with the cutter wheel 16 from the thin film 85 side of the upper layer glass substrate. By forming the vertical cracks Ve, portions of the glass substrates can be prevented from coming off from the flat display panel mother glass substrate when this mother glass substrate is transported to later apparatuses, and at the same time also makes easier the scribe-breaking operation of the breaking process.
(3) After this, the flat display panel mother glass substrate 80 applied with the first protective film 86 is transported by a transport robot R2 to a second film processing apparatus 203. The second film processing apparatus 203 is provided with the same mechanisms as the application mechanisms used in apparatuses for applying polarizing plates in the manufacturing processes of liquid crystal mother glass substrates, and, as shown in FIG. 26(c), applies a second protective film 87 having a greater thickness and a greater adhesive strength compared to the film 85 to the upper layer glass substrate 80A. As with the first protective film 86, the thickness of the second protective film 87 is of the range from 40 to 80 µm.
(4) Further, the flat display panel mother glass substrate 80 is turned over so that the glass substrate 80A becomes the lower layer, and is transported by a transport robot R3 to a first breaking apparatus 204, and by applying pressure to the glass substrate 80B side with a breaker bar 39 as shown in FIG. 26(d), the shallow vertical cracks Ve with periodically varied depths formed on the glass substrate 80A are elongated to vertical cracks VE.
(5) Then, the flat display panel mother glass substrate 80 is transported by a transport robot R4 to a third film processing apparatus 205, and one corner of the first protective film 86 is suctioned and held by a suction pad of a robot provided with at least one suction pad, and the suction pad is moved in a direction diagonal to the flat display panel mother glass substrate 80 and also moved up, thus peeling off the first protective film 86.
(6) Next, the flat display panel mother glass substrate 80 is transported by a transport robot R5 to a second scribing apparatus 206, and by scribing the glass substrate 80B of the flat display panel mother glass substrate 80 from which the first protective film 86 has been peeled off with the cutter wheel 16 from the side of the thin film 85 as shown in FIG. 26(e), shallow vertical cracks Vf with periodically varied depths are formed on the glass substrate 80B positioned as the upper layer. By forming the vertical cracks Vf, portions of the glass substrate can be prevented from coming off from the flat display panel mother glass substrate when this mother glass substrate is transported to later apparatuses.
(7) After this, the flat display panel mother glass substrate 80 is transported by a transport robot R6 to a fourth film processing device 207. The fourth film processing apparatus 207 is provided with the same mechanisms as the application mechanisms used in apparatuses for applying polarizing plates in the manufacturing processes of liquid crystal mother glass substrates, and, as shown in FIG. 26(f), further applies a second protective film 87 onto the thin film 85 of the glass substrate 80B that is positioned as the upper layer.
(8) Further, the flat display panel mother glass substrate 80 is turned over so that the glass substrate 80B becomes the lower layer, and is transported by a transport robot R7 to a first breaking apparatus 208, and by applying pressure to the glass substrate 80A side that is positioned as the upper layer with a breaker bar 39 as shown in FIG. 26(g), the shallow vertical cracks Vf with periodically varied depths formed on the glass substrate 80B are elongated to vertical cracks VF.
(9) Next, the flat display panel mother glass substrate 80 is transported by a transport robot R8 to a fifth film processing apparatus 209, and, as shown in FIG. 26(h), one corner of the second protective film 87 that has been applied to the glass substrate 80A is suctioned and held by a suction pad of a robot provided with at least one suction pad, and the suction pad is moved in a direction diagonal to the flat display panel mother glass substrate and also moved up, thus also removing the thin film 85 from the glass substrate 80A positioned as the upper layer.
(10) Next, the flat display panel mother glass substrate 80 is transported by a transport robot R9 to a separating apparatus 210. The separating apparatus 210 is provided with a spherically shaped table, a suction clamping means that suction-clamps and secures to the table a substrate mounted on the table, a thrust-up pin that thrusts up the substrate onto the table, and a robot r that picks up a product. And as shown in FIG. 26(i), the flat display panel mother glass substrate 80 is mounted on the spherically shaped table (shown as a flat-surface table in FIG. 26 in order to make the separated condition of the substrates easier to understand), and suction-clamped and secured along the vertical cracks VE and VF to separate each product 110. Then, although not shown in the figure, UV light is irradiated to weaken the adhesive strength of the second protective film 87 that has been applied to the glass substrate 80B, and to the thin film 85, and a pin thrusts out from the lower side of the spherically shaped table toward the product 110, and the product 110 is supported and discharged by the robot r.

The processes of the above-described Working Example 1 includes a step (1) of applying the thin film 85 to both sides of the flat display panel mother glass substrate 80, and a step (2) of performing scribing on the thin film 85. At this time, even if cullets are produced, they are merely scattered on the thin film 85, and do not attach to the glass substrate 80A, and therefore it is possible to avoid causing scratches to the glass substrate 80A. Furthermore, the first protective film 86 is applied to the glass substrate on the lower side, and since there is no direct contact during scribing between the glass substrate 80B and the table that supports the mother substrate for flat display panels due to the first protective film 86 positioned on the lower surface of the flat display panel mother glass substrate 80, the substrate surface is protected from scratching. In step (3), a second protective film is applied to the glass substrate 80A, and in step (4), the mother substrate for flat display panels is turned over so that the glass substrate 80A becomes the lower layer side, then mounted on a table of the first breaking apparatus, and the glass substrate 80A is scribe-broken by the breaker bar 39. In step (5), the thin film 85 does not peel off from the glass substrate 80B even when the protective film 86 peels off, as the adhesive strength of the first protective film 86 is less than the thin film 85 directly below. In step (7), the second protective film 87 is applied to the glass substrate 80B, and by turning over the flat display panel mother glass substrate 80 in this state, the second protective film 87 becomes in the lower surface position of the flat display panel mother glass substrate 80, and since there is no direct contact between the glass substrate 80A and the table that supports the mother substrate for flat display panels due to the second protective film 87, the substrate surface is protected from scratching. Furthermore, in step (9), after the second protective film 87 is applied to the glass substrate 80A, the adhesive strength of the second protective film 87 is greater than the thin film 85 directly below when peeling, and therefore the thin film 85 directly below is also peeled off from the glass substrate 80A. By this step, the cullets remaining on the glass substrate 80A are removed together with the second protective film 87.

### Working Example 2

The following is an explanation of a working example in which the present invention is applied to a method of scribe-breaking a reflective-type projector substrate formed by bonded together a glass substrate that is one kind of a brittle material substrate and a silicon substrate. The glass substrate on one side of the reflective-type projector substrate is taken as glass substrate 80A, and the silicon substrate on the other side is taken as silicon substrate 80C, with the material of the glass of the glass substrate 80A taken as a non-alkali glass for example. Furthermore, the cutter wheel used is the cutter wheel 16 of FIG. 8 that can obtain cracks in which the depth of the vertical crack is periodically varied within the glass substrate.

The vertical cracks obtained during scribing the silicon substrate 80C with the cutter wheel 16 of FIG. 8 are continuously shallow.

Consequently, by only substituting the silicon substrate 80C for the glass substrate 80B of FIG. 26, the scribe-breaking process under the above-described conditions is the same scribe-breaking process as FIG. 26 in which Working Example 1 is shown. For this reason, explanation of the scribe-breaking process will be omitted here.

### Working Example 3

The following is an explanation of a working example in which the present invention is applied to a method of scribe-breaking a transmissive-type projector substrate formed by bonded together a glass substrate that is one kind of a brittle material substrate and a glass substrate. The glass substrate on one side of the transmissive-type projector substrate is taken as glass substrate 80A, and the glass substrate on the other side is taken as 80B, with the material of the glass of the glass substrate 80A and the glass substrate 80B taken as quartz glass for example. Furthermore, the cutter wheel used is the cutter wheel 11 of FIG. 2, or the cutter wheel 16 of FIG. 8.

As the material of the glass substrate 80A and glass substrate 80B of FIG. 26 is a rigid, brittle material such as quartz, the vertical cracks formed during scribing are different from the shallow cracks of periodically varied depths in Working Example 1, and are continuously shallow.

The scribe-breaking process under the above-described conditions is the same scribe-breaking process as FIG. 26 in which Working Example 1 is shown. For this reason, explanation of the scribe-breaking process will be omitted here.

### Working Example 4

The following is an explanation of a working example in which the present invention is applied to a method of scribe-breaking a reflective-type projector substrate formed by bonded together a glass substrate that is one kind of a brittle material substrate and a silicon substrate. The glass substrate on one side of the reflective-type projector substrate is taken as glass substrate 80A, and the silicon substrate on the other side is taken as silicon substrate 80C, with the material of the glass of the glass substrate 80A taken as quartz glass for example. Furthermore, the cutter wheel used is the cutter wheel 11 of FIG. 2, or the cutter wheel 16 of FIG. 8.

As the material of the glass substrate 80A of FIG. 26 is a rigid, brittle material such as quartz, the vertical cracks formed during the scribing of the glass substrate 80A are different from the shallow cracks of periodically varied depths in Working Example 1, and are continuously shallow, and the vertical cracks formed on the silicon substrate 80C are also continuously shallow.

Consequently, the scribe-breaking process under the above-described conditions is the same scribe-breaking process as FIG. 26 in which Embodiment 80 is shown. For this reason, explanation of the scribe-breaking process will be omitted here.

### Working Example 5

The following is an explanation of a working example in which the present invention is applied to a method of scribe-breaking a flat display panel mother glass substrate 80 formed by bonded together glass substrates that are one kind of a brittle material substrate. The glass substrate on one side of the flat display panel mother glass substrate 80 is taken as glass substrate 80A, and the glass substrate on the other side is taken as glass substrate 80B, with the material of the glass of the glass substrate 80A and the glass substrate 80B taken as a non-alkali glass for example. Furthermore, the cutter wheel used is the cutter wheel 11 of FIG. 2, which obtains long vertical cracks that almost pass through the glass substrate in the thickness direction.

The scribe-breaking process under the above-described conditions does not require steps (d) and (g) from FIG. 26 in which the scribe-breaking process of Working Example 1 is shown, and the upper-lower positions of the glass substrate 80A and 80B are swapped in steps (h) and (i), with the glass substrate 80B becoming the substrate of the upper layer, and the glass substrate 80A becoming the substrate of the lower layer. Furthermore, long vertical cracks that almost pass through the glass substrate in the thickness direction of the glass substrate 80A and the glass substrate 80B are obtained in the (scribing steps) steps (b) and (e).

### Working Example 6

The following is an explanation of a working example in which the present invention is applied to a method of scribe-breaking a reflective-type projector substrate formed by bonded together a glass substrate that is one kind of a brittle material substrate, and a silicon substrate. The substrate on one side of the reflective-type projector substrate is taken as glass substrate 80A, and the substrate on the other side is taken as silicon substrate 80C, with the material of the glass of the glass substrate 80A taken as a non-alkali glass for example. Furthermore, the cutter wheel used is the cutter wheel 11 of FIG. 2, which obtains long vertical cracks that almost pass through the glass substrate in the thickness direction.

Long vertical cracks that almost pass through the glass substrate in the thickness direction are obtained when scribing the glass substrate 80A under the above-described conditions, while continuously shallow vertical cracks are obtained when scribing the silicon substrate 80C.

For the scribe-breaking process under the above-described conditions, the silicon substrate 80C is substituted for the glass substrate 80B in FIG. 26 in which the scribe-breaking process of Working Example 1 is shown, and in step (a), the thin film 85 and the first protective film 86 applied to the silicon substrate 80C are omitted. Also, steps (d), (f), and (h) are unnecessary, and from step (g), the projector substrate is turned over and placed on a table of a separating device.

Furthermore, an example is shown in Embodiment 6 of the silicon substrate 80C being scribed and broken after the glass substrate 80A is scribed, but the glass substrate 80A may be scribed after the silicon substrate 80C is scribed and broken first.

Further still, in order to reduce to a minimum the influence of cullets produced during scribing, it is preferable that a thin film or protective film is applied as procedurally appropriate to the surface of the silicon substrate 80C as well.

Polyethylene is used in the present invention as the material for the thin film 85, the first protective film 86, and the second protective film 87, but as long as the film material has elasticity, there is no limitation to polyethylene in what can be used.

In accordance with the scribe-breaking process for flat display panel mother glass substrates shown in Working Example 1, FIG. 27(a) is a diagram showing scribe-breaking equipment for a bonded brittle material substrate, with the equipment included in this scribe-breaking process arranged in a straight line. The actions of this scribe-breaking equipment will be omitted as these have already been described in the explanation of the steps of the Working Example 1.

Furthermore, when there is an unnecessary step such as in Working Example 5 and Working Example 6, the processing apparatus for the unnecessary step and the transport robot that transports to that processing device are excluded from the automatic scribe-breaking equipment line shown in FIG. 27(a).

In FIG. 27(b), the various processing apparatuses of the scribe-breaking equipment of FIG. 27(a) are arranged in a cluster-type configuration, with eight processing devices, from the first scribing apparatus 202 to the fifth film processing device 209, arranged in a circle. Transport between the eight processing devices is performed by a single transport robot R, while the transport from the first film processing apparatus 201 to the first scribing device 202 is performed by a transport robot R1, and the transport from the fifth film processing device 209 to the separating apparatus 210 is performed by a transport robot R9.

In FIG. 27(b), the eight processing apparatuses from the scribing device 202 to the fifth film processing device 209 are ordered in a counter-clockwise configuration, but in order to improve the processing cycle time of the automatic scribe-breaking equipment line, and to restrict the facility space of each device in the configuration that makes up the line equipment, the eight processing devices do not necessarily need to be arranged in this order.

Furthermore, when there is an unnecessary step such as in Working Example 5 and Working Example 6, the processing apparatus for the unnecessary step and the transport robot that transports to that processing device do not have to be included in equipment configuration of the automatic scribe-breaking equipment line shown in FIG. 27(b).

The scribe-breaking methods of embodiments of the present invention were described above for the case of scribing from the outer side of a substrate surface in which special processing is not performed, in a process of scribe-breaking a large dimension mother substrate into a plurality of smaller dimension flat display panels with two substrates bonded together in a configuration as a bonded substrate. However, there are also cases of scribing from the inner side of a substrate surface in which special processing is used. Examples of such special processing include aluminum films and resist films used when forming an electrical control circuit that is formed on opposite sides of a bonded substrate, as well as ITO films and chrome plating films formed inside a substrate in terminal portions serving as a current-conducting means for supplying power or signals to the bonded substrate panel. Furthermore, other examples include the forming in advance of an aluminum thin film on opposite sides of a bonded substrate in order to fulfill the necessary display functionality, and the application of a thin film-form of polyimide film. In order to avoid film peel-off in portions with film applied and processed in this way in scribe-breaking positions, and to scribe-break in the desired position with good precision, it is necessary to scribe from the side on which the film is formed. The blade-edge disclosed in this application is able to effectively respond to such a requirement.

### Cutter wheel producing apparatus

The following is an explanation of a cutter wheel producing apparatus for manufacturing a cutter wheel 11 and 16 provided with depressions and protrusions on the blade-edge ridge portion as shown in FIGS. 2 and 8.

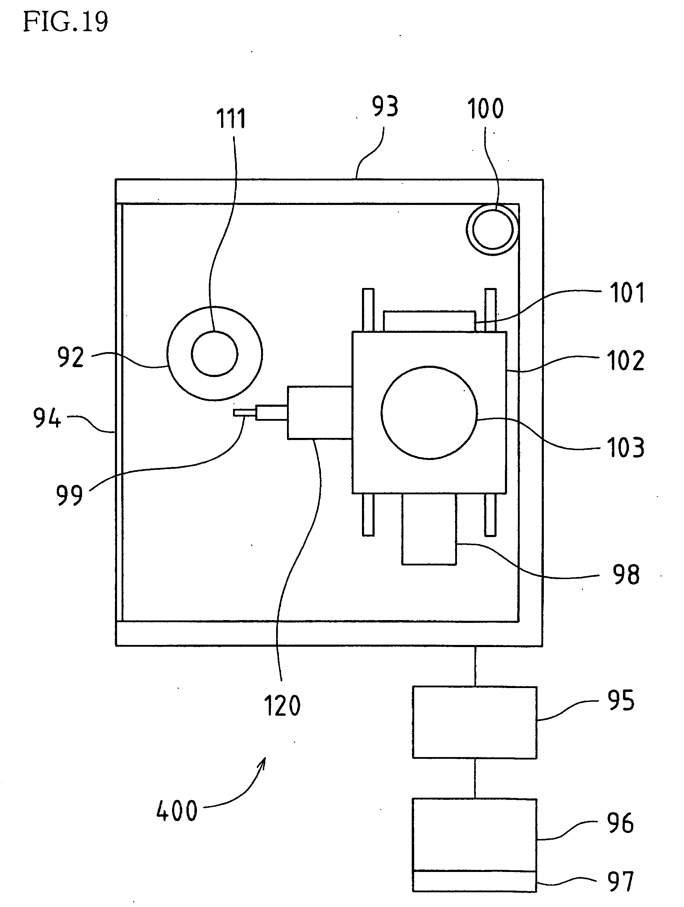

FIG. 19 is a top view showing a simplified configuration of an embodiment of a cutter wheel producing apparatus.

This cutter wheel producing apparatus 400 is provided with a structure for forming depressions and protrusions on a blade-edge by grinding the ridge portion of the blade-edge for a cutter wheel that is formed with a blade-edge at the ridge portion.

The cutter wheel producing apparatus 400 has a housing 93 in which is arranged a grinding stone 92 that rotates freely supported and secured by a spindle motor 111, and provided at the front panel of the housing 93 is a door portion 94 that is capable of opening to allow a cutter wheel targeted for grinding to be transported in and out. The door portion 94 is a safety door, and a safety control device (not shown in figure) is provided that shuts down the grinding process if the door is opened during the grinding of a cutter wheel.

A grinding mechanism 102 is provided inside the housing 93 that is capable of approaching and moving away from the grinding stone 92. The approaching and moving away from the grinding stone 92 by the grinding mechanism 102 is controlled by a feed motor 98. The feed motor 98 is capable of adjusting the feed and withdrawal for the desired position of the grinding mechanism 102 by rotating a ball screw that is not shown in the figure.

The grinding mechanism 102 has a wheel support portion 99 that supports the cutter wheel during grinding. Provided at a rear portion of the wheel support portion 99 is a blade-edge rotation motor 120 that rotates the cutter wheel at an angle that has been fixed in advance. Furthermore, the grinding mechanism 102 is provided with a horizontal alignment handle 101 and a vertical alignment handle 103, and horizontal and vertical alignments are adjusted with these manually, or automatically by a control mechanism not shown in the figure.

A control device 95 is provided outside the housing 93 that controls the positioning and movement of the grinding mechanism 102. Furthermore, the control device 95 is provided with an operation portion 97 for specifying the grinding conditions of the cutter wheel by the grinding mechanism 102.

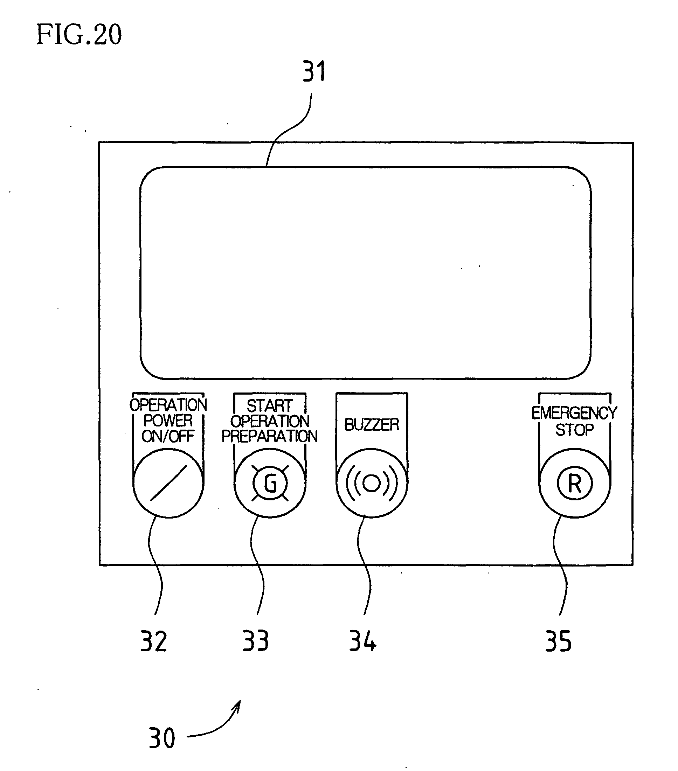

The operation portion 97 is configured as a touch panel such as that shown in FIG. 20 for example. The touch panel shown as an example in FIG. 20 is provided with various operating modes for the entire apparatus, setup conditions, and a touch panel operation portion 31 that displays a set of instructions and conditions such as warnings. And provided at a lower portion are a power switch 32 that operates control-power input and shut-off, an illuminated push button switch 33 that specifies the start of preparation for operating, an alarm buzzer 34 for issuing alarm information, and an emergency shutdown push button switch 35 for specifying an operation shutdown at the time of an emergency.

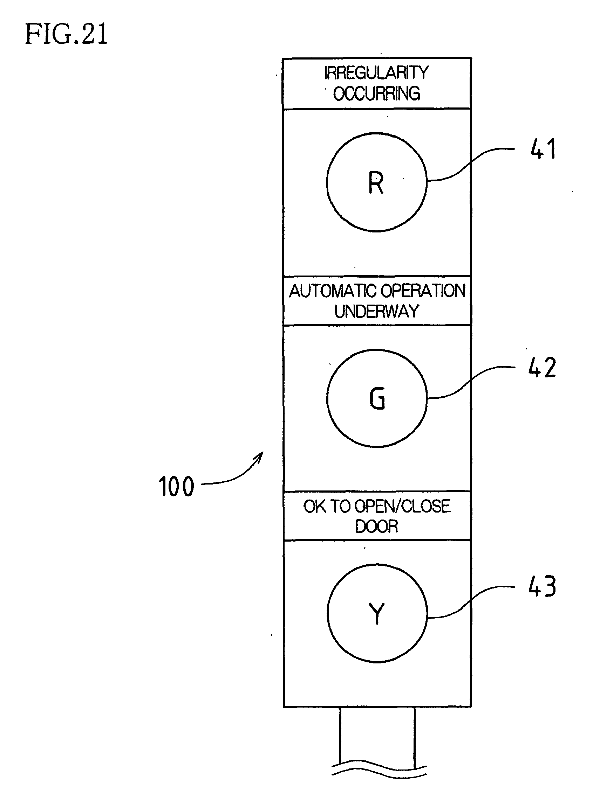

Furthermore, provided at an upper portion of the housing 93 is a signal tower 100, which is a lamp indicator that indicates conditions inside the housing such as that an irregularity is occurring, that automatic operation is underway, and that it is OK to open or close the door. FIG. 21 shows an example of the signal tower 100. In this example, a red indicator lamp 41 is provided that indicates an irregularity is occurring inside the housing 93, as well as a green indicator lamp 42 that indicates automatic operation is underway inside the housing 93, and a yellow indicator lamp 43 that indicates conditions are OK to open or close the door.

The following is an explanation of the operation of the above-described configuration of the cutter wheel producing apparatus 400.

First, initial settings are made with an operation portion 30 for the grinding conditions of the cutter wheel targeted for grinding.

For example, the following conditions are input as the initial settings:
- First area rotational angle F₁; groove depth, D₁₁, ..., D₁ₙ
- Second area rotational angle F₂; groove depth, D₂₁, ..., D₂ₙ
- M-th area rotational angle Fₘ; groove depth, Dₘ₁, ..., Dₘₙ
- Number of divisions per area: N
- Number of areas: R

When the input of the initial settings is finished, the grinding process of the cutter wheel begins.

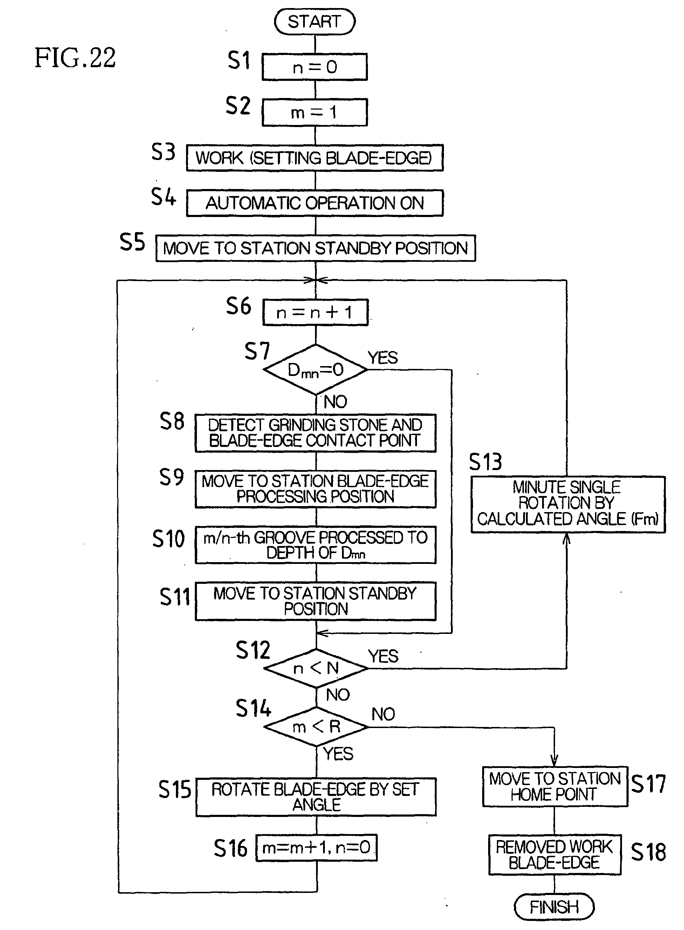

FIG. 22 is a flowchart that explains the grinding process of the cutter wheel. The following is an explanation of the grinding process of the cutter wheel based on the flowchart.

First, the number of divisions is set as n = 0 (S1), then the number of areas is set as m = 1(S2).

Next, the cutter wheel targeted for grinding is attached to the wheel support portion 99 (S3).

Next, automatic operation of the grinding mechanism 102 begins with the operation of an operation portion 96 (S4). Further still, after movement to a station standby position (S5), a calculation n = n + 1 is executed (S6). Next, a judgment is made of whether or not Dₘₙ = 0 (S7). If judged here that Dₘₙ ≠ 0, the process proceeds to step 8 (S8) below, and if judged that Dₘₙ = 0, processing at that blade-edge position is not required, and therefore the process proceeds to a step 12 (S12) that will be discussed later. In step 8, a position is detected at which a leading edge of the grinding stone 92 contacts the blade-edge of the cutter wheel. An optical means, a mechanical means, or an electronic means can be used to detect the contact position. In order to raise the processing precision of the grinding stone 92, detection of the contact of the blade-edge of the cutter wheel to the grinding stone 92 is made every time the blade-edge contacts the grinding stone.

After the position at which the leading edge of the grinding stone 92 contacts the blade-edge is detected, the grinding mechanism 102 is moved to a blade-edge processing position by the feed motor 98 (S9).

Next, the grinding mechanism 102 is moved in the direction of the grinding stone 92 so that the blade-edge firmly contacts the grinding stone 92, and the m-th groove No. n is processed to a depth of depth Dmn (S10).

Concerning the depth of the n-th groove in the m-th area, each groove is formed in step 10 to assume the groove depth Dmn of the input value that is set in advance in the initial settings. Furthermore, likewise, the rotational angle of the m-th area is also set in advance by the rotational angle Fm of the input value that is set in the initial settings.

Next, the grinding mechanism 102 is moved to a standby position (S11).

Next, the number of divisions n and the number of divisions N are compared, and a judgment is made of whether or not n < N (S12). If n < N is the case, the process proceeds to step 13, and if n < N is not the case, the process proceeds to step 14.

In step 13, the blade-edge rotational motor 20 causes rotation by a minute angle Fm. Then, returning to step 9 via steps 6, 7, and 8, grinding processing is carried out at the minutely rotated position of the blade-edge.

In step 12, if judged that n < N is not the case, this means that the number of divisions n has reached the number of division N, which is set in advance, thus the process proceeds to step 14, and a judgment is made of whether or not m < R (S14).

If judged here that m < R, the blade-edge is rotated by the blade-edge rotational motor 120 by the angle of the settings (S15). Then 1 is added to the set number of areas m, thus updating the number of areas (m + 1). Furthermore, the initial setting of n = 0 is carried out (S16). After that, grinding processing is continued to be carried out by returning to step 9 via steps 6, 7, and 8.

In step 14, when judged that m < R is not the case, this indicates that the number of areas m has reached the number of areas R set in the initial settings, thus the process proceeds to step 17, and the grinding mechanism 102 returns to a home position (S17).

Next, the glass cutter with a grinded blade-edge is removed (S18), and the grinding processing finishes.

Using the above-described cutter wheel producing apparatus 400 makes it possible to form grooves of desired depths with fine precision in desired locations of the entire periphery of a blade-edge.

It should be noted that although the cutter wheel producing apparatus shown in FIG. 19 is provided with a single grinding mechanism 102 for the grinding stone 92, a configuration may also be made in which a grinding stone is positioned near the center of the housing, and a plurality grinding mechanisms are provided that are able to access the periphery of the grinding stone. This enables large improvements in cutter wheel processing efficiency proportional to the number of grinding mechanisms installed.

Further still, it is also possible to install a plurality of grinding stones vertically stacked, and the blade-edges of a plurality of cutter wheels that are targeted for grinding on the respective grinding stones can be positioned facing the grinding stones.

Furthermore, a configuration is also possible in which a plurality of cutter wheels are attachable to a single cutter wheel support portion in the grinding mechanism, and multiple cutter wheels can be grinded at the same time in a single grinding process. This enables further improvements in cutter wheel processing efficiency.

Further still, the above-described working examples were explained for the case of a mechanical configuration in which, as a configuration of a producing apparatus, a grinding stone that rotates freely is supported and secured by an attachment portion 112 which is secured while the grinding mechanism 102 is movable. However, conversely, it is also possible that the grinding mechanism 102 is secured while the grinding stone attachment portion 112 employs a movable mechanical configuration, and the ridge vicinity of the cutter wheel is processed likewise to manufacture a blade-edge that has a jagged shape.

### INDUSTRIAL APPLICABILITY

As described above, the cutter wheel of the present invention is able to scribe in locations near to the convex portions and thin films of devices while still ensuring a wheel thickness of necessary strength. That is, by opposing the convex portion or thin film of the device with the face of the wheel on the side closer to the blade-edge ridge, it is possible to bring the blade-edge ridge closer to the convex portions or thin film compared to conventional cutter wheels, and scribing can be performed in the immediate vicinity of convex portions or thin film without causing damage to the convex portions or thin film when scribe-breaking and separating a substrate.

Furthermore, when the blade-edge ridge of the cutter wheel is provided with protrusions, horizontal cracks are not caused even with a large blade-edge pressure, and a long vertical crack can be obtained with a depth that is proportional to that pressure. With a long vertical crack, precise breaking can be performed along the scribe line in the breaking operation of the subsequent step, thus improving yield. Furthermore, as the breaking operation is made easier, the requirements of breaking processes can be relaxed or simplified, and depending on the situation it is also possible to eliminate the breaking process.

Further still, for cutter wheels whose blade-edge ridge is displaced from either side of the center between the sides of the wheel, the cutter wheel of the present invention is formed with grooves of a predetermined shape at a predetermined pitch on not more than three-quarters of the entire blade-edge periphery of the blade-edge portion, with superior processing characteristics compared with a cutter wheel with groove portions formed on the entire blade-edge periphery.

Furthermore, with this glass cutter wheel, a cutter wheel formed with groove portions of a predetermined shape at a predetermined pitch on not more than one-quarter of the entire blade-edge periphery, it is possible to prevent forming a vertical crack that reaches the vicinity of the lower surface of the substrate. Desired scribing characteristics can be obtained by varying the proportion of groove portions to the entire length of the periphery. And thus by varying the scribing characteristics, it is possible to prevent in advance such events as a scribe line portion scribe-breaking and a portion of that substrate falling during transport of the glass substrate.

Further still, in the scribe-breaking method of the present invention, the scribing process is performed with a thin film applied to the glass substrate surfaces of the bonded substrate, and therefore the cullets produced in the scribing process do not adhere to the glass substrates and the glass substrates are not scratched.

Furthermore, in this configuration, a protective film is applied onto the thin film on the glass substrate of the upper layer after the scribing process. After this, when the configuration has a step of peeling off the protective film from the glass substrate of the upper layer along with the thin film, the cullets produced during the scribing process adhere firmly to the protective film, and are removed along with the thin film when the protective film is peeled off.

The apparatuses and methods of the present invention are useful and enable the supply of high-quality, high-reliability products.

## Claims

1. A cutter wheel comprising a blade-edge ridge that is displaced to one side face from a center between both side faces of the wheel.

2. The cutter wheel according to claim 1, wherein protrusions of a predetermined shape are formed at a predetermined pitch along the entire periphery of the blade-edge ridge.

3. The cutter wheel according to claim 2, wherein the pitch of the protrusions is 20 to 200 µm for a wheel diameter of 1 to 20 mm.

4. The cutter wheel according to claim 2 or 3, wherein a height of the protrusions is 2 to 20 µm for a wheel diameter of 1 to 20 mm.

5. The cutter wheel according to any of the claims 1 to 4, wherein a shaft is integrally fitted to the wheel as a protrusion at both sides of the wheel.

6. A cutter wheel comprising a blade-edge ridge that is displaced to one side face from a center between both side faces of the wheel, wherein a plurality of grooves of a predetermined shape and a predetermined pitch are formed at the ridge portion of the cutter wheel, and wherein the cutter wheel is used for scribe-breaking a brittle material,
wherein the proportion of a length of an area occupied by the plurality of groove portions to an entire periphery of the ridge portion is less than 1.

7. The cutter wheel according to claim 6, wherein the proportion of the length of the area occupied by the plurality of groove portions to the entire periphery of the ridge portion is larger than 1 / 4 and not greater than 3 / 4.

8. The cutter wheel according to claim 6, wherein the proportion of the length of the area occupied by the plurality of groove portions to the entire periphery of the ridge portion is not greater than 1 / 4.

9. The cutter wheel according to any of the claims 6 to 8, wherein the pitch of the grooves formed over the plurality of grooves is 20 to 200 µm for a wheel diameter of 1 to 20 mm.

10. The cutter wheel according to any of the claims 6 to 8, wherein a depth of the plurality of grooves is 2 to 20 µm for a wheel diameter of 1 to 20 mm.

11. The cutter wheel according to any of the claims 6 to 10, wherein a shaft that passes through the wheel is integrally formed with the wheel.

12. The cutter wheel according to any of the claims 6 to 8, wherein at least one groove portion area is formed at the ridge portion, and wherein the depths of the grooves are respectively different so that the groove depth becomes deeper from end portions of each groove portion area toward a center portion.

13. A cutter wheel wherein groove portions are formed along the entire periphery of the ridge portion, and wherein an area in which the depth of the grooves becomes successively deeper is continuous with an area in which the depth of the grooves becomes successively shallower.

14. A scribing apparatus, comprising:
a table on which a brittle substrate is mounted;
a scribe head arranged above the table; and
a cross-scribing means for forming intersecting scribe lines with the scribe head in the brittle substrate on the table,
wherein the scribe head comprises the cutter wheel of any of the claims 1 to 13.

15. The scribing apparatus according to claim 14, comprising a cutter wheel rotation means for rotating an orientation of the cutter wheel by 180 degrees each time the forming of one scribe line is completed.

16. The scribing apparatus according to claim 14, comprising two cutter wheels, wherein the two cutter wheels are arranged parallel, and so as that the blade-edge ridge of each cutter wheel is in a farthest position from the other.

17. A scribing apparatus comprising a mechanism that moves a cutter head in an X direction and/or a Y direction relative to a table on which a brittle material is mounted, wherein the cutter head is equipped with the cutter wheel of any of the claims 1 to 13.

18. A scribing method that uses the cutter wheel of claim 6, wherein the depth of a vertical crack formed in a brittle material subjected to scribing is periodically varied by scribing using a wheel in which a proportion of a length of an area occupied by the plurality of groove portions to an entire periphery of the ridge portion is less than 1.

19. The scribing method according to claim 18, wherein scribing is performed using a wheel in which the proportion of the length of the area occupied by the plurality of groove portions to the entire periphery of the ridge portion is not greater than 3 / 4.

20. The scribing method according to claim 18, wherein scribing is performed using a wheel in which the proportion of the length of the area occupied by the plurality of groove portions to the entire periphery of the ridge portion is not greater than 1 / 4.

21. A method for scribe-breaking a bonded glass substrate comprising a first step of scribing, a second step of scribing, and a step of breaking, wherein the cutter wheel of any of the claims 1 to 13 is used in the second step of scribing.

22. A method for scribe-breaking a bonded glass substrate comprising a first step of scribing, a first step of breaking, a second step of scribing, and a second step of breaking, wherein the cutter wheel of any of the claims 1 to 13 is used in the second step of scribing.

23. A method for scribe-breaking a bonded substrate, which is a method of scribe-breaking a bonded substrate in which a pair of glass substrates are bonded together, comprising a step of scribing in a state in which a thin film is applied to both sides of the bonded substrate.

24. The method for scribe-breaking a bonded glass substrate according to claim 23,
comprising, after the step of scribing, a step of applying a protective film that is thicker and has a greater adhesive strength than the thin film to the thin film on the glass substrate of the upper layer, and peeling off from the glass substrate of the upper layer the protective film along with the thin film after going through a predetermined process.

25. The method for scribe-breaking a bonded substrate according to claim 23 or 24, wherein, after a thin film is applied to both sides of the bonded substrate, a first protective film is applied to the thin film on the glass substrate of the lower layer that is thicker than, and has a weaker adhesive strength than the thin film, and wherein, by scribing from the side of the thin film of the glass substrate of the upper layer in this state, a vertical crack is formed in the glass substrate of the upper layer that reaches to a lower surface of that glass substrate, and then, after applying a second protective film to the thin film on the glass substrate of the upper layer that is thicker than, and has a weaker adhesive strength than the thin film, and peeling off the first protective film, the bonded substrate is turned over so that the glass substrate of the lower layer becomes the upper layer side, and wherein, by scribing from the side of the thin film of the glass substrate positioned on the upper layer, a vertical crack is formed in the glass substrate positioned on the upper layer that reaches to a lower surface of that glass substrate, and then, after applying a second protective film to the thin film positioned on the upper layer, the second protective film is peeled off from the glass substrate positioned on the upper layer along with the thin film.

26. A method for scribe-breaking a bonded substrate in which a glass substrate and a silicon substrate are bonded together, comprising a step of scribing the glass substrate to which a thin film has been applied.

27. The method for scribe-breaking a bonded substrate according to claim 26, comprising, after the step of scribing, a step of applying a protective film to the thin film on the glass substrate of the upper layer that is thicker than and has a greater adhesive strength than the thin film, and peeling off the protective film from the glass substrate along with the thin film after going through a predetermined process.

28. The method for scribe-breaking a bonded substrate according to claim 26 or 27, wherein, after a thin film is applied to the glass substrate, a vertical crack is formed that reaches to a lower surface of the glass substrate of the upper layer by scribing from the thin film side of the glass substrate of the upper layer while the silicon substrate is positioned as the lower layer, and then, a protective film that is thicker than, and has a greater adhesive strength than the thin film is applied to the thin film on the glass substrate of the upper layer, and the bonded substrate is turned over so that the silicon substrate of the lower layer becomes the upper layer side, and after scribing the silicon substrate positioned as the upper layer, the bonded substrate is turned over so that the silicon substrate becomes the lower layer side, and a vertical crack is formed in the silicon substrate by applying pressure to the glass substrate positioned on the upper layer.

29. The method for scribe-breaking a bonded substrate according to any of the claims 23 to 28, wherein a cutter wheel is used as a means for scribing, and a first cutter wheel provided with grooves along the entire periphery of the blade-edge ridge, or a second cutter wheel in which an area with grooves and an area without grooves are formed at a predetermined proportion can be selectively used as the cutter wheel.

30. A cutter wheel producing apparatus for manufacturing the cutter wheel of any of the claims 2 to 13, comprising:
at least one rotatably supported, disk-shaped grinding member; and
a grinding mechanism that supports at least one cutter wheel subjected to grinding, and brings in contact and moves away the cutter wheel in regard to the grinding member, and
wherein the grinding mechanism is provided with a rotation means for moving a portion of the cutter wheel being grinded by the grinding member.

31. The cutter wheel producing apparatus according to claim 30, further comprising:
a contacting/removal means for bringing in contact and moving away the grinding mechanism in regard to the grinding member; and
a control means for controlling the means for bringing in contact and moving away, and the rotation means.

32. The cutter wheel producing apparatus according to claim 31, wherein the control means controls the rotation means by a number of divisions and a number of areas of the entire periphery of ridge portion of the cutter wheel, and forms a groove portion at a desired location of the ridge portion.

33. A cutter wheel manufacturing method for manufacturing the cutter wheel of any of the claims 2 to 13,
wherein an outer periphery of the cutter wheel is processed at a predetermined position and until a predetermined depth using at least one rotatably supported, disk-shaped grinding member; and a grinding mechanism that supports at least one cutter wheel subjected to grinding, and alternately brings in contact and moves away the cutter wheel from the grinding member.

## Amended claims

### Amended claims under Art. 19.1 PCT

**1.** (amended) A cutter wheel comprising a blade-edge ridge that is displaced to one side face from a center between both side faces of the wheel, wherein a blade-edge angle is defined by the two side faces of the wheel that are substantially equally inclined with the blade-edge ridge at the center.

**2.** The cutter wheel according to claim 1, wherein protrusions of a predetermined shape are formed at a predetermined pitch along the entire periphery of the blade-edge ridge.

**3.** The cutter wheel according to claim 2, wherein the pitch of the protrusions is 20 to 200 µm for a wheel diameter of 1 to 20 mm.

**4.** The cutter wheel according to claim 2 or 3, wherein a height of the protrusions is 2 to 20 µm for a wheel diameter of 1 to 20 mm.

**5.** The cutter wheel according to any of the claims 1 to 4, wherein a shaft is integrally fitted to the wheel as a protrusion at both sides of the wheel.

**6.** (amended) A cutter wheel comprising a blade-edge ridge that is displaced to one side face from a center between both side faces of the wheel, wherein a plurality of grooves of a predetermined shape and a predetermined pitch are formed at the ridge portion of the cutter wheel forming a blade-edge angle that is substantially equally inclined with the blade-edge ridge at the center, and wherein the cutter wheel is used for scribe-breaking a brittle material, and
wherein the proportion of a length of an area occupied by the plurality of groove portions to an entire periphery of the ridge portion is less than 1.

**7.** The cutter wheel according to claim 6, wherein the proportion of the length of the area occupied by the plurality of groove portions to the entire periphery of the ridge portion is larger than 1 / 4 and not greater than 3 / 4.

**8.** The cutter wheel according to claim 6, wherein the proportion of the length of the area occupied by the plurality of groove portions to the entire periphery of the ridge portion is not greater than 1 / 4.

**9.** The cutter wheel according to any of the claims 6 to 8, wherein the pitch of the grooves formed over the plurality of grooves is 20 to 200 µm for a wheel diameter of 1 to 20 mm.

**10.** The cutter wheel according to any of the claims 6 to 8, wherein a depth of the plurality of grooves is 2 to 20 µm for a wheel diameter of 1 to 20 mm.

**11.** The cutter wheel according to any of the claims 6 to 10, wherein a shaft that passes through the wheel is integrally formed with the wheel.

**12.** The cutter wheel according to any of the claims 6 to 8, wherein at least one groove portion area is formed at the ridge portion, and wherein the depths of the grooves are respectively different so that the groove depth becomes deeper from end portions of each groove portion area toward a center portion.

**13.** (amended) The cutter wheel according to claim 1, wherein groove portions are formed along the entire periphery of the ridge portion, and wherein an area in which the depth of the grooves becomes successively deeper is continuous with an area in which the depth of the grooves becomes successively shallower.

**14.** A scribing apparatus, comprising:
a table on which a brittle substrate is mounted;
a scribe head arranged above the table; and
a cross-scribing means for forming intersecting scribe lines with the scribe head in the brittle substrate on the table,
wherein the scribe head comprises the cutter wheel of any of the claims 1 to 13.

**15.** The scribing apparatus according to claim 14, comprising a cutter wheel rotation means for rotating an orientation of the cutter wheel by 180 degrees each time the forming of one scribe line is completed.

**16.** The scribing apparatus according to claim 14, comprising two cutter wheels, wherein the two cutter wheels are arranged parallel, and so as that the blade-edge ridge of each cutter wheel is in a farthest position from the other.

**17.** A scribing apparatus comprising a mechanism that moves a cutter head in an X direction and/or a Y direction relative to a table on which a brittle material is mounted, wherein the cutter head is equipped with the cutter wheel of any of the claims 1 to 13.

**18.** A scribing method that uses the cutter wheel of claim 6, wherein the depth of a vertical crack formed in a brittle material subjected to scribing is periodically varied by scribing using a wheel in which a proportion of a length of an area occupied by the plurality of groove portions to an entire periphery of the ridge portion is less than 1.

**19.** The scribing method according to claim 18, wherein scribing is performed using a wheel in which the proportion of the length of the area occupied by the plurality of groove portions to the entire periphery of the ridge portion is not greater than 3 / 4.

**20.** The scribing method according to claim 18, wherein scribing is performed using a wheel in which the proportion of the length of the area occupied by the plurality of groove portions to the entire periphery of the ridge portion is not greater than 1 / 4.

**21.** A method for scribe-breaking a bonded glass substrate comprising a first step of scribing, a second step of scribing, and a step of breaking, wherein the cutter wheel of any of the claims 1 to 13 is used in the second step of scribing.

**22.** A method for scribe-breaking a bonded glass substrate comprising a first step of scribing, a first step of breaking, a second step of scribing, and a second step of breaking, wherein the cutter wheel of any of the claims 1 to 13 is used in the second step of scribing.

**23.** (amended) A method for scribe-breaking a bonded substrate, in which a pair of glass substrates are bonded together, comprising a step of scribing in a state in which a thin film is applied to both sides of the bonded substrate, wherein the cutter wheel of any of the claims 1 to 13 is used in this step.

**24.** The method for scribe-breaking a bonded glass substrate according to claim 23,
comprising, after the step of scribing, a step of applying a protective film that is thicker and has a greater adhesive strength than the thin film to the thin film on the glass substrate of the upper layer, and peeling off from the glass substrate of the upper layer the protective film along with the thin film after going through a predetermined process.

**25.** The method for scribe-breaking a bonded substrate according to claim 23 or 24, wherein, after a thin film is applied to both sides of the bonded substrate, a first protective film is applied to the thin film on the glass substrate of the lower layer that is thicker than, and has a weaker adhesive strength than the thin film, and wherein, by scribing from the side of the thin film of the glass substrate of the upper layer in this state, a vertical crack is formed in the glass substrate of the upper layer that reaches to a lower surface of that glass substrate, and then, after applying a second protective film to the thin film on the glass substrate of the upper layer that is thicker than, and has a weaker adhesive strength than the thin film, and peeling off the first protective film, the bonded substrate is turned over so that the glass substrate of the lower layer becomes the upper layer side, and wherein, by scribing from the side of the thin film of the glass substrate positioned on the upper layer, a vertical crack is formed in the glass substrate positioned on the upper layer that reaches to a lower surface of that glass substrate, and then, after applying a second protective film to the thin film positioned on the upper layer, the second protective film is peeled off from the glass substrate positioned on the upper layer along with the thin film.

**26.** (amended) A method for scribe-breaking a bonded substrate in which a glass substrate and a silicon substrate are bonded together, comprising a step of scribing the glass substrate to which a thin film has been applied, wherein the cutter wheel of any of the claims 1 to 13 is used in this step.

**27.** The method for scribe-breaking a bonded substrate according to claim 26, comprising, after the step of scribing, a step of applying a protective film to the thin film on the glass substrate of the upper layer that is thicker than and has a greater adhesive strength than the thin film, and peeling off the protective film from the glass substrate along with the thin film after going through a predetermined process.

**28.** The method for scribe-breaking a bonded substrate according to claim 26 or 27, wherein, after a thin film is applied to the glass substrate, a vertical crack is formed that reaches to a lower surface of the glass substrate of the upper layer by scribing from the thin film side of the glass substrate of the upper layer while the silicon substrate is positioned as the lower layer, and then, a protective film that is thicker than, and has a greater adhesive strength than the thin film is applied to the thin film on the glass substrate of the upper layer, and the bonded substrate is turned over so that the silicon substrate of the lower layer becomes the upper layer side, and after scribing the silicon substrate positioned as the upper layer, the bonded substrate is turned over so that the silicon substrate becomes the lower layer side, and a vertical crack is formed in the silicon substrate by applying pressure to the glass substrate positioned on the upper layer.

**29.** The method for scribe-breaking a bonded substrate according to any of the claims 23 to 28, wherein a cutter wheel is used as a means for scribing, and a first cutter wheel provided with grooves along the entire periphery of the blade-edge ridge, or a second cutter wheel in which an area with grooves and an area without grooves are formed at a predetermined proportion can be selectively used as the cutter wheel.

**30.** A cutter wheel producing apparatus for manufacturing the cutter wheel of any of the claims 2 to 13, comprising:
at least one rotatably supported, disk-shaped grinding member; and
a grinding mechanism that supports at least one cutter wheel subjected to grinding, and brings in contact and moves away the cutter wheel in regard to the grinding member, and
wherein the grinding mechanism is provided with a rotation means for moving a portion of the cutter wheel being grinded by the grinding member.

**31.** The cutter wheel producing apparatus according to claim 30, further comprising:
a contacting/removal means for bringing in contact and moving away the grinding mechanism in regard to the grinding member; and
a control means for controlling the means for bringing in contact and moving away, and the rotation means.

**32.** The cutter wheel producing apparatus according to claim 31, wherein the control means controls the rotation means by a number of divisions and a number of areas of the entire periphery of ridge portion of the cutter wheel, and forms a groove portion at a desired location of the ridge portion.

**33.** A cutter wheel manufacturing method for manufacturing the cutter wheel of any of the claims 2 to 13,
wherein an outer periphery of the cutter wheel is processed at a predetermined position and until a predetermined depth using at least one rotatably supported, disk-shaped grinding member; and a grinding mechanism that supports at least one cutter wheel subjected to grinding, and alternately brings in contact and moves away the cutter wheel from the grinding member.
